# EUROPÄISCHE PATENTSCHRIFT

(11) **EP 3 374 834 B1**
(45) Veröffentlichungstag und Bekanntmachung des Hinweises auf die Patenterteilung: **12.08.2026**
(21) Anmeldenummer: 16805265.2
(22) Anmeldetag: 11.11.2016
(51) Int. Cl.: G05D 1/02

(54) **UNTERTEILUNG VON KARTEN FÜR DIE ROBOTERNAVIGATION**
SUBDIVISION OF MAPS FOR ROBOT NAVIGATION
SUBDIVISION DE CARTES POUR LA NAVIGATION D'UN ROBOT

(30) Priorität: 11.11.2015 DE 102015119501
(43) Veröffentlichungstag der Anmeldung: 19.09.2018
(73) Patentinhaber: Papst Licensing GmbH & Co. KG, 78112 St. Georgen (DE)
(72) Erfinder: ARTES, Harold, 4020 Linz (AT); SCHAHPAR, Michael, 4020 Linz (AT); SEETHALER, Dominik, 4020 Linz (AT); VOGEL, Reinhard, 4020 Linz (AT)
(74) Vertreter: Westphal, Mussgnug & Partner, Patentanwälte mbB
(86) Internationale Anmeldenummer: PCT/AT2016/060108
(87) Internationale Veröffentlichungsnummer: WO 2017/079777

(56) Entgegenhaltungen:
- EP-A1- 2 595 024
- EP-A2- 2 078 996
- EP-A2- 2 287 697
- EP-A2- 2 573 639
- WO-A1-2015/025599
- DE-A1- 102010 017 689
- US-A1- 2012 173 070
- US-A1- 2016 132 056

## Beschreibung

### TECHNISCHES GEBIET

Die vorliegende Beschreibung betrifft das Gebiet der autonomen mobilen Roboter, insbesondere die Unterteilung von Karten eines Robotereinsatzgebietes, in dem sich der Roboter bewegt und anhand deren sich der Roboter orientiert.

### HINTERGRUND

Zahlreiche autonome mobile Roboter sind für verschiedenste private oder gewerbliche Anwendungen erhältlich, beispielsweise die Bearbeitung oder Reinigung von Bodenflächen, der Transport von Gegenständen oder die Inspektion einer Umgebung. Einfache Geräte kommen ohne die Erstellung und Nutzung einer Karte des Robotereinsatzgebiets aus, indem sie sich beispielsweise zufällig über eine zu reinigende Bodenfläche bewegen (vgl. z.B. Publikation EP 2287697 A2 von iRobot Corp.). Komplexere Roboter nutzen eine Karte des Robotereinsatzgebiets, welche sie selber erstellen oder in elektronischer Form zur Verfügung gestellt bekommen.

Die Karte eines solchen Robotereinsatzgebiets ist im Allgemeinen recht komplex und nicht dafür ausgelegt, dass ein menschlicher Benutzer sie lesen kann, was jedoch für die Planung der vom Roboter durchzuführenden Arbeiten nötig sein kann. Um die Arbeitsplanung zu vereinfachen, kann das Robotereinsatzgebiet automatisiert in Teilgebiete untergliedert werden. Zu diesem Zweck existieren zahlreiche Verfahren. Aus der akademischen Literatur sind verschiedene abstrakte Verfahren zur Aufteilung eines zu reinigenden Gebiets bekannt, womit beispielsweise für den Roboter die Planung seines Pfades durch das Gebiet vereinfacht oder eine gleichmäßige Abdeckung der Bodenoberfläche erreicht werden kann. Dadurch, dass diese abstrakten Verfahren keine typischen Eigenschaften menschlicher Umgebung (z.B. eine Wohnung) berücksichtigen, haben sie im Allgemeinen das Problem, dass sie sich nicht an den Bedürfnissen eines Nutzers orientieren und zu einem für den menschlichen Nutzer schwer nachvollziehbaren Verhalten des Roboters führen.

Ein sehr einfaches Verfahren ist die Aufteilung des Robotereinsatzgebiets in mehrere kleine gleichförmige Teilgebiete vordefinierter Form und Größe. Die Teilgebiete werden dann mit einem vordefinierten Standardverfahren nacheinander behandelt (z.B. gereinigt) werden. Für einen menschlichen Nutzer gut nachvollziehbar ist eine Aufteilung des Robotereinsatzgebiets (z.B. einer Wohnung) in Räume wie z.B. Wohnzimmer, Flur, Küche; Schlafzimmer, Bad, etc. Um dies zu erreichen, versucht der Roboter (oder ein damit verbundener Prozessor), die Position von Türen und Wänden zu ermitteln beispielsweise mit Hilfe einer Deckenkamera, einem auf die Decke gerichteten Abstandsensor oder anhand typischer geometrischen Eigenschaften wie z.B. der Türbreite. Ein anderes bekanntes Verfahren ist die Aufteilung des Robotereinsatzgebiets entlang von Bodenbelagsgrenzen, welche der Roboter mittels Sensoren ermitteln kann. Diese Aufteilung ermöglicht beispielsweise die Wahl spezieller Reinigungsmethoden in Abhängigkeit der Bodenart. Die Karte und ihre Aufteilung kann dem menschlichen Nutzer angezeigt werden und dieser kann die Aufteilung korrigieren oder an seine Bedürfnisse anpassen, indem er z.B. Bereichsgrenzen verschiebt oder neue Bereichsgrenzen einfügt. Aus dem Dokument EP 2 595 024 A1 ist ein Verfahren zur Erkennung und Vermeidung von Hindernissen bekannt. Die detektierten Messpunkte, welche sich innerhalb eines bestimmten Abstands von einem Roboter befinden, werden als Cluster zusammengesetzt.

### ZUSAMMENFASSUNG

Die der Erfindung zu Grunde liegende Aufgabe die bekannten Verfahren zur Aufteilung einer Karte eines Robotereinsatzgebietes und deren Verwendung zu verbessern, insbesondere flexibler zu gestalten. Diese Aufgabe wird durch ein Verfahren gemäß Anspruch 1 sowie durch einen Roboter gemäß Anspruch 13 gelöst. Verschiedene Ausführungsformen und Weiterentwicklungen der Erfindung sind Gegenstand der abhängigen Ansprüche.

Es wird ein Verfahren zur automatischen Aufteilung einer Karte eines Robotereinsatzgebietes eines autonomen mobilen Roboters beschrieben. Gemäß einem Beispiel der Erfindung umfasst das Verfahren folgendes: das Detektieren von Hindernissen sowie Bestimmen derer Größe und Position in der Karte mittels an dem Roboter angeordneter Sensoren; das Analysieren der Karte mittels eines Prozessors zur Erkennung eines Bereichs mit einem Cluster von Hindernissen, wobei ein Cluster mindestens zwei Hindernisse aufweist; und das Definieren eines ersten Teilgebiets mittels eines Prozessors derart, dass das erste Teilgebiet einen erkannten Cluster enthält. Dem ersten Teilgebiet kann mindestens ein Attribut zugeordnet werden, das Einfluss auf das Verhalten des mobilen Roboters haben kann. Die Hindernisse sind in einem Cluster so nahe beieinander, dass eine geradlinige Durchfahrt durch den Cluster unter Einhaltung eines Sicherheitsabstandes nicht möglich ist.

Weitere Ausführungsbeispiele beziehen sich auf einen Roboter, der mit einer internen und/oder externen Datenverarbeitungsanlage verbunden ist, die dazu ausgebildet ist, ein Softwareprogramm auszuführen, das, wenn es von der Datenverarbeitungsanlage ausgeführt wird, den Roboter dazu veranlasst, die hier beschriebenen Verfahren auszuführen.

### KURZE BESCHREIBUNG DER ABBILDUNGEN

Die Erfindung wird nachfolgend anhand von den in den Abbildungen dargestellten Beispielen näher erläutert. Die Darstellungen sind nicht zwangsläufig maßstabsgetreu und die Erfindung beschränkt sich nicht nur auf die dargestellten Aspekte. Vielmehr wird Wert darauf gelegt, die der Erfindung zugrunde liegenden Prinzipien darzustellen.
Figur 1 zeigt eine von einem mobilen Roboter automatisiert erzeugte Karte seines Robotereinsatzgebietes (einer Wohnung) mit einer Vielzahl von Begrenzungslinien.
Figur 2 zeigt die Außengrenzen des Robotereinsatzgebietes aus Fig. 1, welche basierend auf den Messdaten (Begrenzungslinien) ermittelt wurde.
Figur 3 zeigt einer Unterteilung des Robotereinsatzgebietes aus Fig. 2 in Teilgebiete (Zimmer) z.B. basierend auf erkannten Türen und Innenwänden.
Figur 4 zeigt die weitere Unterteilung des Robotereinsatzgebietes aus Fig. 3, wobei unzugängliche Bereiche (Möbel) interpretiert wurden.
Figur 5 zeigt die weitere Unterteilung eines Teilgebiets aus Fig. 4 basierend auf erkannten schwer passierbaren Bereichen.
Figur 6 zeigt eine weitere Verfeinerung der Unterteilung aus Fig. 5
Figur 7 entspricht der Darstellung aus Fig. 6, wobei Bodenbeläge und Möbel eingezeichnet sind.
Figuren 8A-8E zeigen die Vorgehensweise zur automatisierten Ermittlung eines schwer passierbaren Bereichs eines Robotereinsatzgebietes oder eines Teilgebietes.
Figuren 9A bis 9F zeigen eine andere Vorgehensweise zur Unterteilung eines Robotereinsatzgebietes mittels sukzessiver Teilung von Rechtecken.
Figur 10 zeigt schematisch die Zuordnung eines Roboterpfades zu einem Teilgebiet.

### DETAILLIERTE BESCHREIBUNG

Ein technisches Gerät ist für einen menschlichen Nutzer im täglichen Leben am nützlichsten, wenn einerseits das Verhalten des Geräts für den Nutzer nachvollziehbar und verständlich ist und andererseits die Bedienung intuitiv möglich ist. Von einem autonomen mobilen Roboter wie beispielsweise einem Bodenreinigungsroboter ("Staubsaugerroboter") erwartet der Nutzer, dass er sich (was seine Arbeitsweise und sein Verhalten betrifft) an den Nutzer anpasst. Dazu muss der Roboter sein Einsatzgebiet durch technische Verfahren ähnlich interpretieren und in Teilbereiche aufteilen wie dies ein menschlicher Nutzer tun würde (z.B. Wohnzimmer, Schlafzimmer, Flur, Küche, Essbereich, etc.). Dies ermöglicht eine einfache Kommunikation zwischen Nutzer und Roboter, beispielsweise in Form einfacher Kommandos an den Roboter (z.B. "Reinige das Schlafzimmer") und/oder in Form von Benachrichtigungen an den Nutzer (z.B. "Reinigung des Schlafzimmers abgeschlossen"). Darüber hinaus können die erwähnten Teilbereiche für die Anzeige einer Karte des Robotereinsatzgebiets und die Bedienung des Roboters mittels dieser Karte genutzt werden.

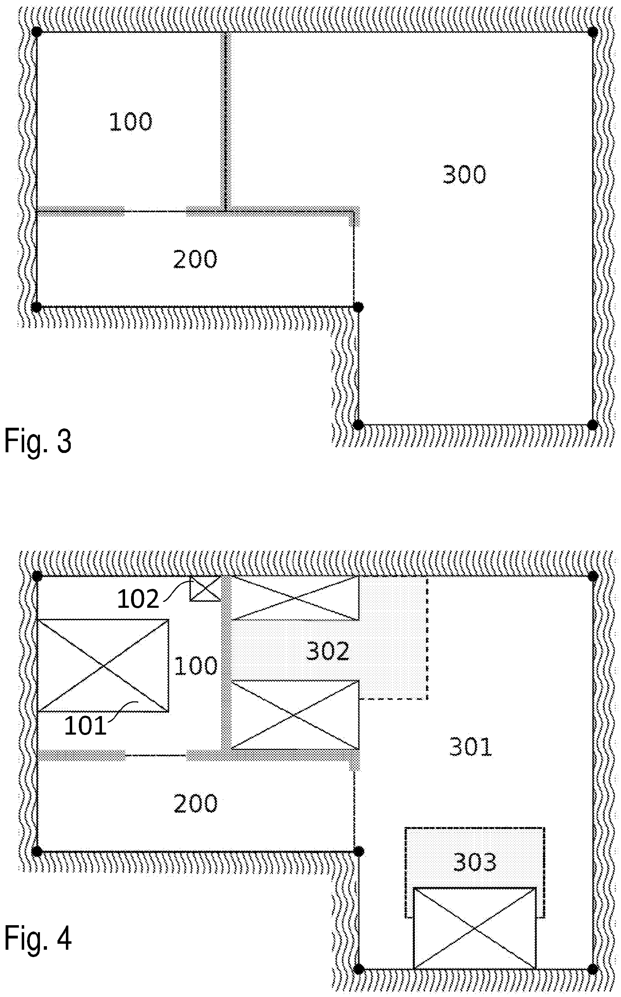

Nun kann eine Aufteilung des Robotereinsatzgebiets in Teilgebiete durch einen Nutzer zum Einen nach anerkannten Konvention und zum Anderen nach persönlichen Vorlieben (und somit benutzerspezifisch, z.B. Essbereich, Kinderspielecke, etc.) vorgenommen werden. Ein Beispiel einer bekannten Konvention ist die Unterteilung einer Wohnung in verschiedene Zimmer wie z.B. Schlafzimmer, Wohnzimmer und Flur (vgl. Fig. 3). Gemäß einer beispielhaften benutzerspezifischen Unterteilung könnte ein Wohnzimmer z.B. in einen Kochbereich, eine Essecke oder Bereiche vor und neben dem Sofa eingeteilt werden (vgl. Fig. 4). Die Grenzen zwischen diesen Bereichen können mitunter sehr "unscharf" definiert sein und unterliegen im Allgemeinen der Interpretation des Nutzers. Ein Kochbereich könnte beispielsweise durch einen Fliesenboden gekennzeichnet sein, während der Essbereich lediglich durch die Anwesenheit eines Tisches mit Stühlen gekennzeichnet ist. Die Anpassung an den menschlichen Nutzer kann für einen Roboter eine sehr schwierige Aufgabe sein und häufig kann eine Roboter-Nutzer-Interaktion notwendig sein, um die Aufteilung des Robotereinsatzgebietes korrekt vorzunehmen. Um diese Roboter-Nutzer-Interaktion einfach und verständlich zu gestalten müssen die Kartendaten und die bereits automatisch vorgenommene Aufteilung vom Gerät interpretiert und aufbereitet werden. Des Weiteren erwartet sich der menschliche Nutzer ein an die vorgenommene Aufteilung angepasstes Verhalten des autonomen mobilen Roboters. Deshalb sollen die Teilgebiete vom Benutzer oder automatisch durch den Roboter mit Attributen versehen werden können, die das Verhalten des Roboters beeinflussen.

Eine technische Voraussetzung hierfür ist, dass der autonome mobile Roboter eine Karte seines Einsatzgebiets besitzt, um sich in diesem anhand der Karte zu orientieren. Diese Karte wird beispielsweise von dem Roboter selbsttätig aufgebaut und permanent gespeichert. Um das Ziel einer für den Nutzer intuitiven Aufteilung des Robotereinsatzgebiets zu erreichen, werden technische Verfahren benötigt, die (1) selbsttätig eine Aufteilung der Karte des Robotereinsatzgebiets wie beispielsweise einer Wohnung nach vorgegebenen Regeln vornehmen, (2) eine einfache Interaktion mit dem Benutzer zulassen, um sich den a-priori nicht bekannten Benutzerwünschen bei der Aufteilung anzupassen, (3) die automatisch generierte Aufteilung vorverarbeiten, um sie dem Benutzer einfach und verständlich in einer Karte darzustellen, und (4) aus der so erstellten Aufteilung möglichst selbsttätig gewisse Eigenschaften ableiten können, die geeignet sind, ein vom Nutzer erwartetes Verhalten zu erreichen.

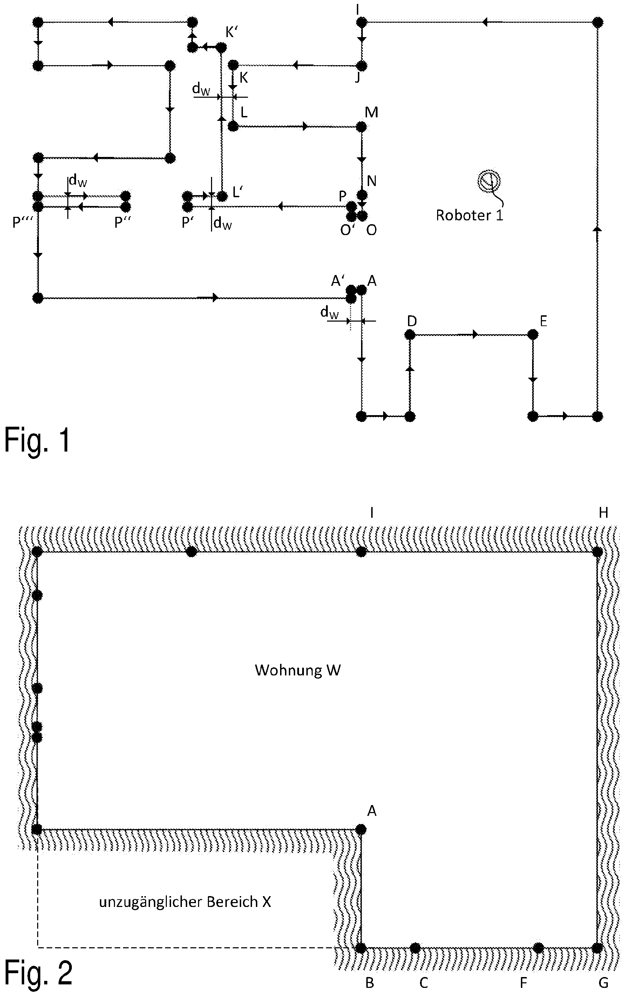

Figur 1 zeigt eine mögliche Darstellung einer Karte eines Robotereinsatzgebietes, wie sie vom Roboter, z.B. mittels Sensoren und eines SLAM-Algorithmus aufgebaut wird. Beispielsweise misst der Roboter mittels eines Abstandssensors den Abstand zu Hindernissen (z.B. eine Wand, ein Möbelstück, eine Tür, etc.) und berechnet aus den Messdaten (üblicherweise eine Punktwolke) Liniensegmente, welche die Grenzen seines Einsatzgebietes definieren. Das Einsatzgebiet des Roboters kann beispielsweise durch eine geschlossene Kette von Liniensegmenten (meist ein konkaver, einfacher Polygonzug) definiert werden, wobei jedes Liniensegment einen Startpunkt, einen Endpunkt und folglich auch eine Richtung aufweist. Die Richtung des Liniensegmentes zeigt an, welche Seite des Liniensegmentes ins Innere des Einsatzgebietes zeigt, bzw. von welcher Seite der Roboter das Hindernis, welches durch ein bestimmtes Liniensegment angezeigt wird, "gesehen" hat. Das in Fig. 1 dargestellte Polygon beschreibt für den Roboter das Einsatzgebiet vollständig, ist jedoch für eine Roboter-Nutzer-Kommunikation nur sehr schlecht geeignet. Ein menschlicher Nutzer wird unter Umständen Schwierigkeiten haben, seine eigene Wohnung wiederzuerkennen und sich darin zu orientieren. Eine Alternative zu der genannten Kette von Liniensegmenten ist eine Rasterkarte, bei der ein Raster von z.B. 10x10cm über das Robotereinsatzgebiet gelegt wird, und jede Zelle (d.h. 10x10cm-Box) markiert wird, sofern Sie von einem Hindernis belegt ist. Auch solche Rasterkarten sind für einen menschlichen Nutzer nur schwer interpretierbar.

Nicht nur um die Interaktion mit einem menschlichen Nutzer zu vereinfachen, sondern auch, um das Einsatzgebiet in (aus Sicht des Nutzers) sinnvollerweise "abzuarbeiten" soll der Roboter zunächst automatisiert sein Robotereinsatzgebiet in Teilgebiete unterteilen. Eine solche Unterteilung in Teilgebiete ermöglicht dem Roboter, seine Aufgabe in seinem Einsatzgebiet leichter, systematischer, differenzierter, (aus Sicht des Nutzers) "logischer", etc. auszuführen und die Interaktion mit dem Nutzer zu verbessern. Um eine sinnvolle Unterteilung zu erhalten, muss der Roboter verschieden Sensordaten gegeneinander abwägen. Insbesondere kann er Informationen über die Befahrbarkeit (schwierig/leicht) eines Bereichs seines Einsatzgebietes nutzen, um ein Teilgebiet zu definieren. Des Weiteren kann der Roboter von der (widerlegbaren) Annahme ausgehen, dass Räume in der Regel rechteckig sind. Der Roboter kann lernen, dass einige Änderungen der Aufteilung zu sinnvolleren Ergebnissen führt (so dass z.B. bestimmte Hindernisse mit einer gewissen Wahrscheinlichkeit in einem bestimmten Teilgebiet liegen).

Wie in Fig. 1 dargestellt, ist ein Roboter üblicherweise in der Lage, Hindernisse mittels Sensoren (z.B. Laser-Abstandssensoren, Triangulations-Sensoren, Ultraschall-Abstandssensoren, Kollisionssensoren oder eine Kombination der genannten) zu erkennen und die Grenzen seines Einsatzgebietes in Form von Begrenzungslinien in einer Karte einzuzeichnen. Allerdings ermöglicht die beschränkte Sensorik eines Roboters im Allgemeinen kein eindeutiges Erkennen einer für einen menschlichen Nutzer selbstverständlichen Unterteilung des Einsatzgebietes in unterschiedliche Räume (z.B. Schlafzimmer, Wohnzimmer, Flur, etc). Selbst die Entscheidung, ob die in der Karte enthaltenen Begrenzungslinien (beispielsweise die Linie zwischen den Punkten J und K in Fig. 1) zu einer Wand oder zu einem Möbelstück gehören, ist nicht ohne weiteres automatisiert möglich. Auch die "Grenze" zwischen zwei Räumen ist für einen Roboter nicht ohne weiteres erkennbar.

Um die erwähnten Probleme zu lösen und eine Unterteilung des Robotereinsatzgebietes in unterschiedliche Teilbereiche (z.B. Zimmer) automatisiert zu ermöglichen, stellt der Roboter basierend auf den Sensordaten "Hypothesen" betreffend die Umgebung des Roboters auf, welche mittels unterschiedlicher Verfahren getestet werden. Kann eine Hypothese falsifiziert werden, wird sie verworfen. Sind zwei Begrenzungslinien (z.B. die Linien A-A' und O-O' in Fig. 1) annähernd parallel und in einem Abstand, der der üblichen lichten Breite (hierfür gibt es standardisierte Größen) eines Türstocks entspricht, kann der Roboter die Hypothese "Türstock" aufstellen und daraus schließen, dass dieser zwei unterschiedliche Zimmer trennt. Im einfachsten Fall kann eine automatisiert aufgestellte Hypothese getestet werden, indem der Roboter den Nutzer "befragt", d.h. Feedback des Nutzers einfordert. Der Nutzer kann die Hypothese dann entweder bestätigen oder verwerfen. Eine Hypothese kann jedoch automatisiert getestet werden, in dem die aus der Hypothese resultierenden Schlussfolgerungen im Hinblick auf Ihre Plausibilität geprüft werden. Wenn die vom Roboter erkannten Räume (z.B. mittels Erkennung der Türschwellen) einen zentralen Raum umfassen, der z.B. kleiner ist als ein Quadratmeter, ist die Hypothese, die letztendlich zu diesem kleinen zentralen Raum geführt hat, wahrscheinlich falsch. Ein weiterer automatisierter Test kann darin bestehen, zu prüfen, ob sich die aus zwei Hypothesen abgeleiteten Schlussfolgerungen widersprechen oder nicht. Wenn beispielsweise sechs Hypothesen betreffend eine Tür aufgestellt werden können und nur bei fünf vermeintlichen Türen kann der Roboter eine Türschwelle (eine kleine Stufe) detektieren, so kann dies ein Indiz dafür sein, dass die Hypothese betreffend die Tür ohne Türschwelle falsch ist.

Bei der Erstellung einer Hypothese durch den Roboter werden verschieden Sensormessungen kombiniert. Für einen Türdurchgang sind dies beispielsweise die Durchgangsbreite, Durchgangstiefe (gegeben durch Wanddicke), die Existenz einer Wand rechts und links des Durchgangs oder eine in den Raum ragende Tür. Diese Informationen können beispielsweise mit einem Abstandssensor durch den Roboter ermittelt werden. Mittels eines Beschleunigungssensors oder eines Lagesensors (z.B. ein gyroskopischer Sensor) kann eine möglicherweise vorhandene Türschwelle, welche der Roboter überfährt, detektiert werden. Durch Bildverarbeitung und eine Vermessung der Deckenhöhe können zusätzliche Informationen ermittelt werden.

Ein weiteres Beispiel für eine mögliche Hypothese ist der Verlauf von Wänden im Robotereinsatzgebiet. Diese sind unter anderem durch zwei parallele Linien gekennzeichnet, welche einen Abstand einer typischen Wanddicke (siehe Fig. 1, Dicke dw) haben und vom Roboter aus zwei entgegengesetzten Richtungen gesehen wurden (z.B. die Linien K-L und L'-K' in Fig. 1). Vor einer Wand können jedoch weitere Objekte (Hindernisse) wie beispielsweise Schränke, Regale, Blumentöpfe, etc., stehen, welche ebenfalls mit Hilfe von Hypothesen identifiziert werden können. Eine Hypothese kann auch auf einer anderen Hypothese beruhen. So ist beispielsweise eine Tür eine Unterbrechung einer Wand. Wenn also eine zuverlässige Hypothese über den Verlauf von Wänden im Einsatzgebiet des Roboters gemacht werden können, so können diese das Erkennen von Türen und somit die automatisierte Unterteilung des Robotereinsatzgebiets erleichtern.

Um Hypothesen zu testen und zu bewerten, kann ihnen ein Maß an Plausibilität zugeordnet werden. In einem einfachen Ausführungsbeispiel wird einer Hypothese für jede bestätigende Sensormessung ein vordefinierter Punktewert gutgeschrieben. Wenn auf diese Weise eine bestimmte Hypothese eine Mindestpunktzahl erreicht, so wird sie als plausibel angesehen. Eine negative Punktzahl könnte zum Verwerfen der Hypothese führen. In einem weiter entwickelten Ausführungsbeispiel wird einer bestimmten Hypothese eine Wahrscheinlichkeit für ihr zutreffen zugeordnet. Dies erfordert ein Wahrscheinlichkeitsmodel, welches Korrelationen zwischen verschiedenen Sensormessungen berücksichtigt, ermöglicht aber auch komplexe Wahrscheinlichkeitsaussagen mit Hilfe stochastischer Rechenmodelle und somit eine verlässlichere Vorhersage der Erwartungen des Benutzers. Beispielsweise können in gewissen Region (z.B. Ländern), in denen der Roboter zum Einsatz kommt, die Türbreiten standardisiert sein. Misst der Roboter eine solche standardisierte Breite, handelt es sich mit hoher Wahrscheinlichkeit um eine Tür. Abweichungen von den Standardbreiten reduzieren die Wahrscheinlichkeit, dass es sich um eine Tür handelt. Hierfür kann beispielsweise ein Wahrscheinlichkeitsmodell basierend auf einer Normalverteilung verwendet werden. Eine weitere Möglichkeit zur Erstellung und Bewertung von Hypothesen ist die Nutzung von "maschinellem Lernen", um geeignete Modelle und Maßfunktionen zu erstellen (siehe z.B. Trevor Hastie, Robert Tibshirani, Jerome Friedman: "The Elements of Statistical Learning", 2. Auflage. Springer-Verlag, 2008). Hierzu werden beispielsweise Kartendaten in verschiedenen Wohnumgebungen durch einen oder mehr Roboter aufgenommen. Diese können dann mit Grundrissen oder durch einen Nutzer eingegebene Daten (z.B. betreffend den Verlauf von Wänden oder Türdurchgängen oder über eine gewünschte Aufteilung) ergänzt werden und von einem Lern-Algorithmus ausgewertet werden.

Eine weitere Methode, die alternativ oder zusätzlich zu der Verwendung der oben erläuterten Hypothesen verwendet werden kann, ist die Unterteilung eines Robotereinsatzgebietes (z.B. eine Wohnung) in mehrere rechteckige Bereiche (z.B. Zimmer). Dieser Ansatz basiert auf der Annahme, dass Zimmer in der Regel rechteckig sind oder aus mehreren Rechtecken zusammengesetzt werden können. In einer von einem Roboter erstellten Karte ist diese rechteckige Form der Zimmer im Allgemeinen nicht zu erkennen, da in den Zimmern zahlreiche Hindernisse mit komplexen Begrenzungen wie z.B. Möbel das Einsatzgebiet des Roboters einschränken.

Basierend auf der Annahme rechteckiger Zimmer wird das Robotereinsatzgebiet mit Rechtecken unterschiedlicher Größe überdeckt, welche die Zimmer wiedergeben sollen. Insbesondere werden die Rechtecke so gewählt, dass jedem für den Roboter zugänglichen Punkt in der Karte des Robotereinsatzgebiets eindeutig ein Rechteck zugeordnet werden kann. Das heißt, die Rechtecke überlappen sich in der Regel nicht. Dabei wird nicht ausgeschlossen, dass ein Rechteck Punkte enthält, die für den Roboter nicht zugänglich sind (z.B. weil Möbel die Zugänglichkeit ausschließen). Das durch die Rechtecke beschriebene Gebiet kann also größer und von geometrisch einfacherer Gestalt sein als das tatsächliche Robotereinsatzgebiet. Um die Orientierung und Größe der einzelnen Rechtecke zu bestimmen, werden beispielsweise lange gerade Begrenzungslinien in der Karte des Robotereinsatzgebiets genutzt, wie sie z.B. entlang von Wänden auftreten (siehe z.B. Fig. 1, Gerade durch die Punkte L' und K', Gerade durch die Punkte P und P' sowie P" und P‴). Zur Auswahl der zu verwendenden Begrenzungslinien werden verschiedene Kriterien verwendet. Ein Kriterium kann z.B. sein, dass die betreffenden Begrenzungslinien zu einer Vielzahl anderer Begrenzungslinien annähernd parallel oder orthogonal sind. Ein weiteres Kriterium kann sein, dass die betreffenden Begrenzungslinien annähernd auf einer Geraden liegen und/oder vergleichsweise (d.h. in der Größenordnung der Außenabmessungen des Robotereinsatzgebietes) lang sind. Andere Kriterien zur Wahl der Orientierung und Größe der Rechtecke sind beispielsweise erkannte Türdurchgänge oder Bodenbelagsgrenzen. Diese und andere Kriterien können zu ihrer Beurteilung in eine oder in mehreren Bewertungsfunktionen (analog zu dem Maß an Plausibilität einer Hypothese, z.B. dem Zuordnen eines Punktewertes für eine Hypothese) verwendet werden, um die konkrete Form und Lage der Rechtecke zu ermitteln. Beispielsweise werden den Begrenzungslinien Punkte für erfüllte Kriterien gegeben. Die Begrenzungslinie mit dem höchsten Punktwert wird als Grenze zwischen zwei Rechtecken genutzt.

Basierend auf der Annahme, dass Räume im Wesentlichen rechteckig sind, kann der Roboter aus der Karte der Begrenzungslinien (siehe Fig. 1) die äußersten Begrenzungslinien zu einem rechtwinkligen Polygon (*rectilinear polygon*) vervollständigen. Das Ergebnis ist in Fig. 2 dargestellt. Eine Möglichkeit ist auch, durch die äußeren Begrenzungslinien der Wohnung ein Rechteck zu legen (siehe Fig. 2, Rechteck, das die Wohnung W und den unzugänglichen Bereich X umschließt), und unzugängliche Bereiche (siehe Fig. 2, Bereich X) davon abzuziehen. Basierend auf erkannten Türen (siehe Fig. 1, Türstock zwischen den Punkten O und A sowie P' und P") und Innenwänden (siehe Fig. 1, antiparallele Begrenzungslinien im Abstand dw) kann die Wohnung automatisiert in drei Zimmer 100, 200 und 300 unterteilt werden (siehe Fig. 3). Dabei werden als Wand detektierte Bereiche bis zu einer Tür oder bis zur Außenbegrenzung der Wohnung verlängert. Unzugängliche Bereiche innerhalb der Zimmer können vom Roboter als Möbelstücke oder sonstige Hindernisse interpretiert und entsprechen in der Karte verzeichnet werden (siehe Fig. 4). Beispielsweise könnte das Möbelstück 101 basierend auf seinen Abmessungen (Abstände der Begrenzungslinien) sogar als Bett (Betten haben genormte Größen) und folglich das Zimmer 100 als Schlafzimmer identifiziert werden. Der Bereich 102 wird als Kommode identifiziert. Es könnte sich jedoch auch um einen Schacht oder einen Kamin handeln.

Der Raum 300 kann basierend auf vom Roboter aufgenommenen Sensordaten weiter unterteilt werden (siehe Fig. 4). Beispielsweise könnte ein Kriterium für eine weitere Unterteilung der Bodenbelag sein. Mittels Sensoren kann der Roboter z.B. zwischen einem gefliesten Boden, einem Parkettboden oder einem Teppichboden unterschieden. An den Grenzen zwischen zwei Bodenbelägen befindet sich meist eine kleine (detektierbare) Unebenheit, der Schlupf der Räder kann für unterschiedliche Bodenbeläge anders sein. Verschiedene Böden unterscheiden sich in ihren optischen Eigenschaften (Farbe, Reflexion, etc.). Im vorliegenden Beispiel erkennt der Roboter im Zimmer 300 ein Teilgebiet 302 mit gefliestem Boden und ein Teilgebiet 303 mit Teppich. Das verbleibende Teilgebiet 301 hat einen Parkettboden. Der geflieste Bereich 302 könnte vom Roboter z.B. als Küchenbereich interpretiert werden.

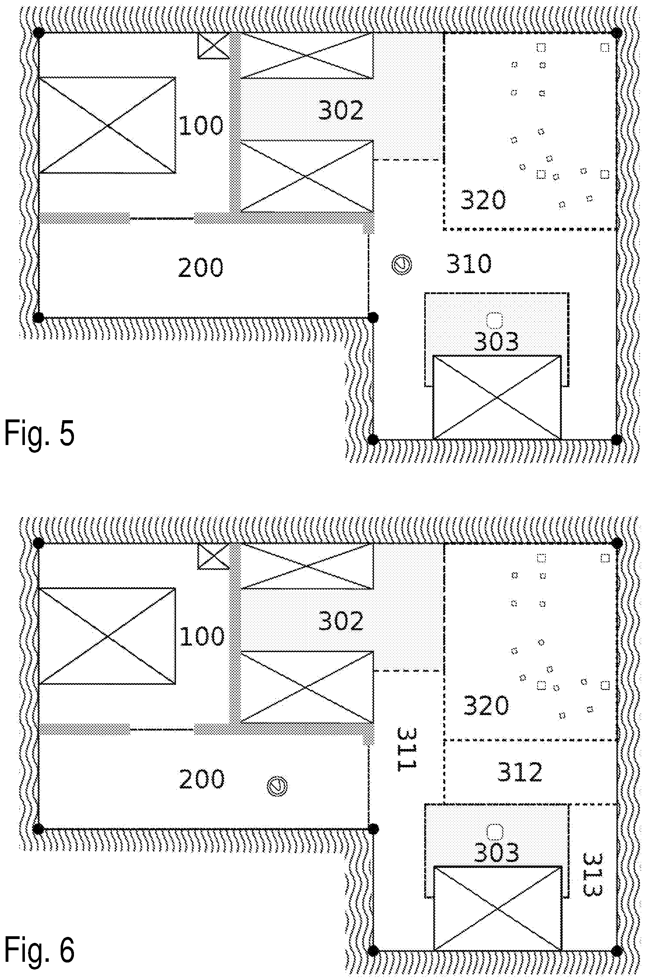

Bisher blieben vergleichsweise kleine Hindernisse unberücksichtigt, wobei "vergleichsweise klein" bedeutet, dass die Hindernisse eine ähnliche Größe haben wie der Roboter oder kleiner sind. In Fig. 5 sind nun oben rechts im Teilgebiet 301 des Zimmers 300 viele kleine Hindernisse in der Karte des Roboters verzeichnet, die nur wenige Zentimeter groß sind. Ein Kriterium für die weitere Unterteilung des Zimmers 300 (bzw. des Teilgebiets 301) kann auch die Passierbarkeit (*passability*) eines Bereichs des Robotereinsatzgebiets sein. In dem in Fig. 5 gezeigten Fall beinhaltet das mit 320 bezeichnete Teilgebiet eine größere Anzahl (einen Cluster) kleiner Hindernisse (z.B. Tischbeine und Stuhlbeine), die eine rasche Geradeausfahrt des Roboters behindern. Sofern der Roboter rasch von einem Punkt zum nächsten fahren möchte (z.B. zu seiner Ladestation), wäre es effizienter, nicht den kürzesten Weg zu nehmen, sondern Gebiete mit vielen kleinen Hindernissen zu umfahren. Folglich kann es sinnvoll sein, aufgrund von vielen kleinen Hindernissen schwer passierbare Gebiete als separate Teilgebiete zu definieren. Der Roboter kann zu diesem Zweck dazu ausgebildet sein, die Karte zu analysieren, um einen Bereichs auf der Karte mit einem Cluster von Hindernissen zu erkennen, die in diesem Bereich so verteilt sind, dass eine geradlinige Durchfahrt des Roboters durch den Bereich von den Hindernissen blockiert ist. Blockiert muss dabei nicht bedeutet, dass eine geradlinige Durchfahrt unmöglich ist. Es genügt schon, wenn kein geradliniger Pfad durch das Teilgebiet existiert, entlang dem der Roboter einen bestimmten Sicherheitsabstand zu Hindernissen einhalten kann oder dass eine kleine Variation (Rotation oder Verschiebung) des geradlinigen Pfades zu einer Kollision mit einem der Hindernisse führen würde. Wird ein solcher Bereich mit einem Cluster von Hindernissen erkannt, definiert der Roboter ein Teilgebiet so, dass das erste Teilgebiet den erkannten Cluster enthält.

Im vorliegenden Beispiel (Fig. 5) wird daher der Bereich rechts oben im Teilgebiet 301 als Teilgebiet 320 definiert, welches mit dem Attribut "schwer passierbar" assoziiert wird. Der verbleibende Teil des Teilgebiets 301 (siehe Fig. 4) wird als Teilgebiet 310 bezeichnet. Basierend auf der Größe und der Anzahl der einzelnen Hindernisse könnte der Roboter sogar erkennen, dass es sich bei den Hindernissen um Tisch- und Stuhlbeine handelt und das Teilgebiet 320 als "Essecke" (*dinette*) definieren. Dem Teilgebiet 320 könnte z.B. auch ein anderes Reinigungsintervall oder ein anderer Reinigungsmodus zugeordnet werden als anderen Teilgebieten. Ein Cluster von Hindernissen kann also beispielsweise dann vom Roboter erkannt werden, wenn die einzelnen Hindernisse (z.B. deren Grundfläche oder deren Durchmesser) für sich jeweils kleiner sind als ein vorgebbarer Maximalwert und wenn die Anzahl der Hindernisse größer ist als ein vorgebbarer Minimalwert (z.B. fünf).

Die Grenzen von "schwer passierbaren" Teilgebieten sind geometrisch nicht eindeutig definiert (anders als z.B. die Grenzen zwischen verschiedenen Bodenbelägen). Es können aber Hypothesen für ihre Lage auf Basis von gewünschten Eigenschaften des zu bildenden Teilgebiets und eines komplementären Teilgebiets aufgestellt werden (siehe Fig. 4, schwer passierbares Teilgebiet 320, komplementäres Teilgebiet 310). Als Kriterien zur Abgrenzung eines schwer passierbaren Teilgebietes kann der Roboter z.B. folgende Regeln verwenden: (1.) Das schwer passierbare Teilgebiet soll möglichst klein sein. (2.) Das Teilgebiet soll kleine Hindernisse umfassen, also beispielsweise Hindernisse deren Grundfläche kleiner als die des Roboters oder deren Längsausdehnung kleiner als der Roboterdurchmesser ist. (3.) Die kleinen Hindernisse stören aufgrund ihrer Anzahl und räumlichen Verteilung eine Geradeausfahrt des Roboters signifikant; im Gegensatz dazu soll beispielsweise ein einzelner Stuhl in der Mitte eines ansonsten leeren Gebietes kein eigenes Teilgebiet definieren. (4.) Die Grenze des schwer passierbaren Teilgebiets soll so gewählt werden, dass eine Reinigung um jedes kleine Hindernis möglich ist, ohne dass der Roboter dazu das Teilgebiet verlassen müsste. Das schwer passierbare Teilgebiet umfasst also einen Bereich von mindestens einem Roboterdurchmesser um die einzelnen Hindernisse herum. (5.) Das schwer passierbare Teilgebiet soll eine möglichst einfache geometrische Form haben, wie beispielsweise ein Rechteck oder ein rechtwinkliges Polygon. (6.) Das komplementäre Teilgebiet (welches durch die Abtrennung eines schwer passierbaren Teilgebietes entsteht) soll gut zu befahren oder zu reinigen sein. Es soll also insbesondere keine sehr kleinen isolierten Bereiche, lange schmale Streifen oder spitze Ecken enthalten.

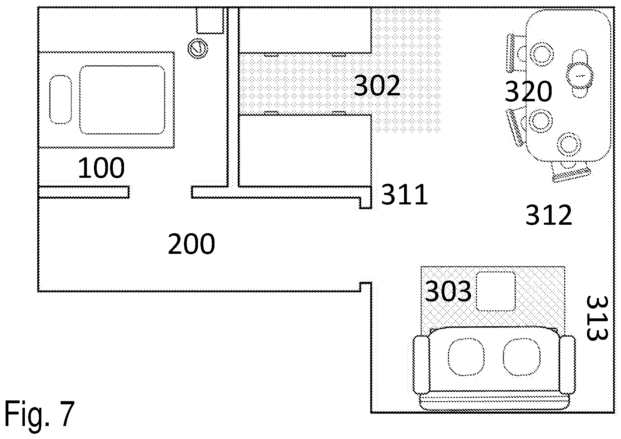

Im vorliegenden Beispiel entsteht durch die Abtrennung des schwer passierbaren Teilgebiets 320 aus dem Gebiet 301 (siehe Fig. 4) das komplementäre Teilgebiet 310, welches weiter in kleinere, im Wesentlichen rechteckige Bereiche 311, 312 und 313 unterteilt werden kann. Diese Unterteilung orientiert sich an den bereits vorhandenen Gebietsgrenzen. Beispielsweise entsteht das Teilgebiet 311 durch eine "Verlängerung" der Grenze zwischen den Teilgebieten 320 (Essecke) und 302 (Kochbereich) nach unten hin bis zum Teilgebiet 303 (Teppich). Die Teilgebiete 312 und 313 entstehen durch eine Verlängerung der Begrenzung des Teilgebiets 303 (Teppich) bis hin zur Außenwand. Um eine bessere Vorstellung der endgültigen Unterteilung der Wohnung zu ermöglichen, ist in Fig. 7 die Wohnung inklusive der Möbel dargestellt.

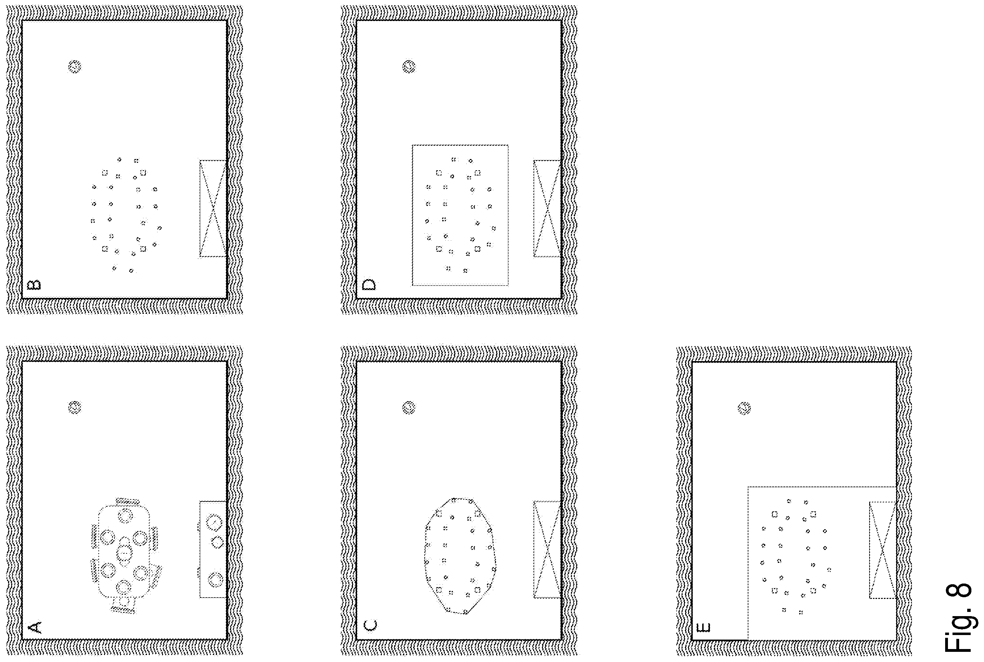

Figur 8 zeigt ein weiteres Beispiel einer Unterteilung eines (Teil-) Gebiets (Zimmers) in kleinere Teilgebiete anhand der erwähnten Eigenschaft der Passierbarkeit (*passability*)*.* Figur 8A illustriert anhand einer Draufsicht ein Beispiel eines Zimmers mit einer Essecke, welches einen Tisch und sechs Stühle sowie ein Sideboard umfasst. Fig. 8B zeigt die von einem Roboter erstellte Karte mit Begrenzungslinien ähnlich dem vorherigen Beispiel aus Fig. 2. An der Position des Tisches "sieht" der Roboter eine Vielzahl keiner Hindernisse (Tisch- und Stuhlbeine), die eine Geradeausfahrt des Roboters (z.B. unter dem Tisch hindurch) stören. Das Sideboard ist als abstraktes Möbelstück dargestellt. Zunächst identifiziert der Roboter die vergleichsweise kleinen Hindernisse (Tisch- und Stuhlbeine, vgl. obige Regeln 2 und 3), gruppiert sie und umschließt sie mit einem möglichst kleinen Polygon (siehe Fig. 8C, vgl. obige Regel Nr. 1). Um dem abgegrenzten Teilgebiet "Essecke" eine möglichst einfache geometrische Form zu geben, versucht der Roboter, um das Polygon herum ein Rechteck anzuordnen (vgl. obige Regel Nr. 5), wobei das Rechteck einen Mindestabstand zum Polygon einhalten muss. Dieser Mindestabstand soll so groß sein, dass der Roboter beim Reinigen des Teilgebiets "Essecke" dieses Teilgebiet nicht verlassen muss (vgl. obige Regel 4). Im Allgemeinen wird daher der Mindestabstand mindestens so groß sein wie der Durchmesser (oder die maximale Außenabmessung) des Roboters. In anderen Fällen wie z.B. bei einer u-förmigen Anordnung mehrere Tische wie in Besprechungsräumen üblich kann es günstig sein, aus der Gruppe kleiner Hindernisse nicht ein sondern mehrere (aneinandergrenzende) rechteckige Teilgebiete zu definieren. Im vorliegenden Beispiel ist das rechteckige Teilgebiet wie in Fig. 8D gezeigt parallel zur Außenwand ausgerichtet. Andere Möglichkeiten um eine günstige Orientierung des Rechtecks zu bestimmen sind die Wahl eines Rechtecks minimalen Flächeninhalts oder die Orientierung des Rechtecks an den Hauptträgheitsachsen (Hauptachsen der Kovarianzmatrix) der Verteilung der kleinen Hindernisse.

Um im komplementären Teilgebiet keine engen, ebenfalls schwer passierbaren Passagen zu erzeugen (vgl. obige Regel 6), werden schmale Bereiche zwischen der (Außen-) Wand und dem rechteckigen Teilgebiet (Fig. 8D) zum zuvor abgegrenzten Rechteck zugeschlagen. Das Ergebnis ist in Fig. 8E dargestellt.

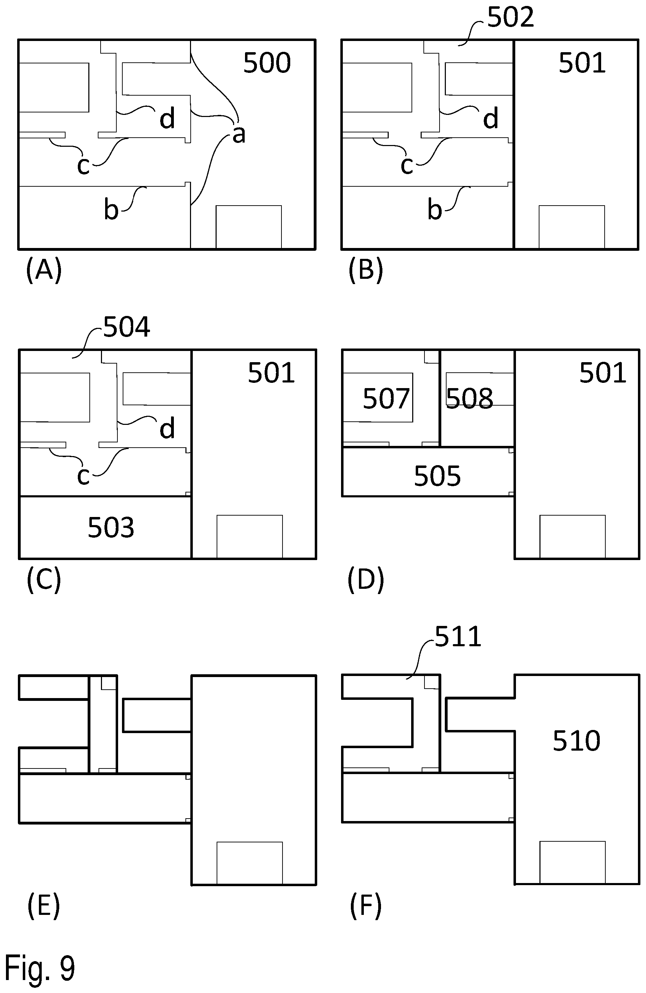

Eine weitere Möglichkeit der Unterteilung eines Robotereinsatzgebietes wird anhand der Fig. 9 dargestellt. In vielen Fällen kann ein Robotereinsatzgebiet aus Rechtecken zusammengesetzt werden, die eine gemeinsame Grenze haben, welche jedoch nicht durch Hindernisse blockiert wird. Diese Rechtecke können zu einem rechtwinkligen Polygon zusammengefasst werden. Dies kann beispielsweise ein Zimmer mit einem Erker repräsentieren oder das mit Wohn- und Kochbereich zusammengesetzte Zimmer 300 dem Beispiel aus Fig. 3. Im Folgenden wird ein mögliches Vorgehen zur Unterteilung eines Robotereinsatzgebietes anhand der Beispielwohnung aus Fig. 7 genauer dargestellt. Die Basis hierfür sind Messdaten des Roboters, welche durch Abstandsmessung zu Hindernissen gewonnen wurden, d.h. die in Fig. 1 dargestellte Kette von Begrenzungslinien. Diese Messdaten können Messfehler enthalten sowie auch Informationen, die für eine Unterteilung der Karte nicht relevant sind und mittels Filterung eliminiert werden können. So können beispielsweise im Folgenden kleine (klein im Vergleich zur ganzen Wohnung, zu einem Zimmer oder zu dem Roboter) Hindernisse unberücksichtigt bleiben.

Um ein vereinfachtes Model des Robotereinsatzgebiets zu erzeugen, werden ausgehend von der Karte der vom Roboter detektierten Begrenzungslinien (siehe Fig. 1) annähernd senkrecht zueinander liegende Begrenzungslinien senkrecht zueinander ausgerichtet und annähernd parallel zueinander liegende Begrenzungslinien parallel zueinander ausgerichtet (Regularisierung). Hierzu wird beispielsweise eine erste Vorzugsachse (z.B. parallel zur längsten Begrenzungslinie oder die Achse, zu der die meisten Begrenzungslinien annähernd parallel sind) ermittelt. Anschließend werden beispielsweise alle Begrenzungslinien, die mit der Vorzugsachse einen Winkel von kleiner als 5° einschließen, so um ihren Mittelpunkt gedreht, dass sie parallel zu der Vorzugsachse sind. Analog verfährt man mit den Begrenzungslinien, die annährend senkrecht zu der Vorzugsachse liegen. Schräg liegende Begrenzungslinien bleiben in dem hier dargestellten Beispiel unberücksichtigt. Das resultierende vereinfachte (Karten-) Modell wird im nächsten Schritt so von einem Rechteck 500 eingeschlossen, dass das Robotereinsatzgebiet vollständig in dem Rechteck enthalten ist (siehe Fig. 9A). Das Rechteck 500 wird hierbei beispielsweise entlang den durch die Regularisierung erhaltenen Vorzugsachsen (senkrecht und waagrecht) ausgerichtet. Im nächsten Schritt wird das Rechteck 500 in zwei kleinere Rechtecke 501 und 502 nach vorgegebenen Regeln unterteilt (siehe Fig. 9B), wobei im vorliegenden Fall, das Rechteck 500 so geteilt wird, dass die gemeinsame Kante (siehe Fig. 9B, Kante a) der resultierenden Rechtecke 501 und 502 durch einen Türstock verläuft. Das Rechteck 502 wird erneut in Rechtecke 503 und 504 geteilt. Die gemeinsame Kante (siehe Fig. 9B, Kante b) der Rechtecke 503 und 504 verläuft durch die die Außenwand repräsentierende Begrenzungslinie. Das Ergebnis ist in Fig. 9C gezeigt. Das Rechteck 503 betrifft einen vollständig unzugänglichen Bereich und ist zu groß als dass es sich um ein Möbelstück handeln könnte; das Rechteck 503 kann deshalb aus der Karte eliminiert werden. Das Rechteck 504 wird weiter in die Rechtecke 505, 507 und 508 geteilt. Die gemeinsame Kante (siehe Fig. 8C, Kante d) der Rechtecke 507 und 508 geht durch eine als Innenwand erkannte Begrenzungslinie (vgl. Fig. 1, Linie L'-K'). Die gemeinsame Kante (siehe Fig. 8C, Kante c) der Rechtecke 505 und 507 (sowie auch 505 und 508) geht durch eine erkannte Tür (vgl Fig. 1, Line P'-P"). Das Ergebnis ist in Fig. 9D dargestellt.

Im Hinblick auf das obige Beispiel kann ein Rechteck also an Schnittlinien geteilt werden, die z.B. basierend auf den zuvor ausgerichteten und parallel oder rechtwinklig zu den Seitenkannten des zu unterteilenden Rechtecks liegenden Begrenzungslinien ermittelt werden. Im vorliegenden Beispiel sind dies mehrere Begrenzungslinien entlang einer Geraden (siehe Fig. 9A, Begrenzungslinien a und c) und/oder vergleichsweise lange Segmente (siehe Fig. 9A, Begrenzungslinien b und d), wobei "vergleichsweise lang" bedeutet, dass die betreffende Begrenzungslinie eine Länge aufweist, welche in der Größenordnung der Breite der Wohnung liegt (z.B. größer als 30% der Schmalseite der Wohnung). Anhand welcher Schnittlinie ein Rechteck in zwei Rechtecke unterteilt wird, kann anhand verschiedener Regeln bewertet werden. Diese Regeln können sich auf absolute oder relative Größen der Begrenzungslinien, des zu teilenden Rechtecks oder der resultierenden Rechtecke beziehen. Die Regeln berücksichtigen insbesondere (1.) Begrenzungslinien mit nahen parallelen Begrenzungslinien in einem Abstand der einer Wanddicke entspricht (siehe Fig. 1, Dicke dw, Fig. 9A, Begrenzungslinien c und d); (2.) mehrere fluchtende Begrenzungslinien (siehe Fig. 9A, Begrenzungslinien a und c); (3.) erkannte Türdurchgänge (fluchtende Begrenzungslinien in einem Abstand der einer typischen Türbreite entspricht); (4.) Begrenzungslinien, die nicht zugängliche Gebiete abgrenzen (siehe Fig. 9A, Begrenzungslinie b); (5.) die absolute Größe und/oder Seitenverhältnisse der entstehenden Rechtecke (Rechtecke mit einem sehr großen oder sehr kleinem Seitenverhältnis werden vermieden); und (6.) die Größe des zu teilenden Rechtecks.

Im Hinblick auf die oben genannten Regeln gibt es im Rechteck 501 (Fig. 9B) keine relevanten Teilungsmöglichkeiten. Das Rechteck 503 (Fig. 9C) wird von dem Rechteck 502 abgetrennt weil die Begrenzungslinie das größere Rechteck 502 komplett durchzieht. Das Rechteck 505 (Fig. 9D) wird vom größeren Rechteck 504 abgetrennt, weil entlang der Begrenzungslinien c eine Tür erkannt wurde und die beiden mit c bezeichneten Begrenzungslinien fluchten. Eine Teilung entlang der Begrenzungslinie d wird durchgeführt, weil sie das zu teilende Rechteck (507 und 508 zusammen) komplett durchzieht. Zudem kann eine Wand entlang der Begrenzungslinie d erkannt werden.

Abhängig von den Kriterien, die zur Aufteilung von Rechtecken herangezogen werden, können die Rechtecke 507 und/oder 508 weiter aufgeteilt werden. Dies führt beispielsweise zu einer Aufteilung gemäß Fig. 9E. Die hierdurch erhaltenen Rechtecke sind vergleichsweise klein, weshalb geprüft wird, ob sie zu anderen Rechtecken hinzugefügt werden können. Beispielsweise hat das aus dem Rechteck 508 hervorgegangene Gebiet eine gute Verbindung zu 501 (das heißt es gibt keine dazwischen liegende Hindernisse, z.B. in Form von Wänden, welche die beiden Gebiete ganz oder teilweise voneinander trennen würden) und kann diesem hinzugefügt werden (siehe Fig. 9F, Teilgebiet 510). Die aus dem Rechteck 507 hervorgegangenen Rechtecke können ebenfalls wieder zusammengefügt werden, wodurch effektiv der große unzugängliche zentrale Bereich (ein Bett im Schlafzimmer) herausgeschnitten wurde (siehe Fig. 9F, Teilgebiet 511).

Ein menschlicher Nutzer erwartet, dass eine erstellte Aufteilung des Robotereinsatzgebiets, in der er sich gut auskennt, sich nicht während oder nach einem Robotereinsatz grundlegend ändert. Einige Optimierungen, welche zu einem verbesserten Verhalten des Roboters führen, wird er jedoch vermutlich akzeptieren. Die Grundlage der Aufteilung einer Karte kann sich von einem Robotereinsatz zum nächsten durch bewegliche Objekte verändern. Der Roboter soll also mit der Zeit eine Aufteilung "lernen", welche nicht durch diese Bewegung gestört wird. Beispiele für bewegliche Objekte sind Türen, Stühle oder Möbel mit Rollen. Beispielsweise können Methoden der Bilderkennung genutzt werden um solche Objekte zu erkennen, zu klassifizieren und wiederzuerkennen. Der Roboter kann als beweglich erkannte Objekte als solche markieren und ggf. bei einem späteren Einsatz an anderer Stelle wiedererkennen.

Lediglich Objekte mit einem festen Standort (wie beispielsweise Wände und große Möbelstücke) sollen für eine dauerhafte Aufteilung des Robotereinsatzgebietes genutzt werden. Objekte die ständig einen neuen Standort haben, können für die Aufteilung ignoriert werden. Insbesondere soll eine einmalige Änderung der Umgebung des Roboters nicht zu einer Neuerstellung der Karte und ihrer Aufteilung führen. Türen können beispielsweise helfen, durch Vergleich des offenen und des geschlossenen Zustands die Grenzen zwischen zwei Zimmern (Teilgebieten) zu spezifizieren. Im Übrigen soll sich der Roboter ein Teilgebiet merken, das aufgrund einer geschlossenen Tür vorübergehend nicht erreichbar ist und gegebenenfalls den Nutzer hierüber informieren. Ein Teilgebiet, welches bei einer ersten Erkundungsfahrt des Roboters aufgrund einer geschlossenen Tür nicht erreichbar war aber in einer späteren Fahrt neu erkannt wird, wird in der Karte als neues Teilgebiet hinzugefügt. Wie oben erwähnt können Stuhl- und Tischbeine genutzt werden, um ein schwer passierbares Teilgebiet abzugrenzen. Stuhlbeine können jedoch durch die Nutzung des Stuhls ihre Position ändern, was zu unterschiedlichen Zeitpunkten zu unterschiedlichen Teilbereichsgrenzen führen könnte. Die Grenze zu einem schwer passierbaren Teilgebiet kann mit der Zeit so angepasst werden, dass sich alle Stühle mit einer vorgegebenen hohen Wahrscheinlichkeit in dem als schwer passierbar erkannten Teilgebiet befinden. Das heißt, basierend auf zuvor gespeicherten Daten über die Position und die Größe von Hindernissen kann die Häufigkeit und somit die Wahrscheinlichkeit (d.h. Parameter eines Wahrscheinlichkeitsmodells) bestimmt werden, ein Hindernis an einer bestimmten Position anzutreffen. Beispielsweise kann die Häufigkeit des Auftretens eines Stuhlbeins in einem bestimmten Bereich durch Messung ermittelt werden. Zusätzlich oder alternativ kann die mittels einer Vielzahl von Messungen ermittelte Dichte der Stuhlbeine in einem bestimmten Gebiet ausgewertet werden. Basierend auf dem Wahrscheinlichkeitsmodell kann dann der erkannte Bereich mit einem Cluster von Hindernissen so angepasst werden, dass sich Hindernisse mit vorgebbarer Wahrscheinlichkeit innerhalb dieses Bereichs befinden. Daraus folgt ggf. eine Anpassung der Grenzen des "schwer passierbaren" Teilgebiets, welches den Cluster mit (wahrscheinlich vorhandenen) Hindernissen beinhaltet.

Des Weiteren gibt es Objekte wie beispielsweise einen Fernsehsessel, die sich zwar in der Regel immer an einer ähnlichen Position in einem Zimmer befinden, deren konkrete Position sich jedoch aufgrund der Benutzung durch den menschlichen Nutzer (geringfügig) ändern kann. Gleichzeitig kann ein solches Objekt eine Größe besitzen, dass es möglicherweise für die Definition eines Teilgebiets herangezogen werden wird. Dies kann z.B. der "Bereich zwischen Sofa und Sessel". Für diese Objekte (z.B. Fernsehsessel) wird mit der Zeit die am ehesten zu erwartende Position bestimmt (z.B. auf Basis des Median, des Erwartungswert oder des Modus). Diese wird dann für eine dauerhafte Aufteilung der Karte und eine anschließende Interaktion mit dem Nutzer(z.B. für die Bedienung und Steuerung des Roboters durch den Nutzer) verwendet.

Ganz allgemein kann dem Nutzer die Möglichkeit geboten werden, die automatisiert vorgenommene Unterteilung der Karte zu prüfen und bei Bedarf zu modifizieren. Ziel der automatisierten Aufteilung ist es jedoch, eine möglichst realistische Aufteilung der Karte automatisiert und ohne Nutzerinteraktion zu erreichen.

Ganz allgemein sei angemerkt, dass, wenn hier von einer Aufteilung der Karte "durch den Roboter" die Rede ist, die Aufteilung mittels einem im Roboter angeordneten Prozessor (inklusive Software) durchgeführt werden kann, jedoch auch auf einem mit dem Roboter verbunden Gerät, zu dem die vom Roboter ermittelten Messdaten übertragen wurden (z.B. via Funk). Die Berechnung der Kartenaufteilung kann also auch auf einem Personal Computer oder auf einem mit dem Internet verbundenen Server erfolgen. Für den menschlichen Nutzer macht das in der Regel keinen Unterschied.

Durch eine passende Aufteilung des Robotereinsatzgebiets in Teilgebiete kann ein Roboter seine Aufgaben "intelligenter" und effizienter ausführen. Um das Verhalten des Roboters besser an die Erwartungen des Nutzers anzupassen, können verschieden Eigenschaften (auch als Attribute bezeichnet) eines Teilgebietes erfasst, einem Teilgebiet zugeordnet oder zur Bildung eines Teilgebiets verwendet werden. Beispielsweise gibt es Eigenschaften, welche es einem Roboter erleichtern sich in seinem Einsatzgebiet zu Lokalisieren, nachdem er beispielsweise durch den Nutzer zu einer verschmutzten Stelle getragen wurde. Die Lokalisierung ermöglicht es dem Roboter nach erfolgter Reinigung selbständig zu seiner Basisstation zurückzukehren. Für diese Lokalisierung nützliche Umgebungseigenschaften können beispielsweise der Bodentyp, eine charakteristische (Wand-)Farbe, die Feldstärke des WLAN oder andere Eigenschaften elektromagnetischer Felder sein. Darüber hinaus können kleine Hindernisse bei einer Lokalisierung dem Roboter einen Hinweis auf seine Position in der Karte geben. Hierbei muss nicht die konkrete Position der Hindernisse genutzt werden, sondern nur ihr (gehäuftes) Auftreten in einem bestimmten Bereich. Andere Eigenschaften beeinflussen direkt das Verhalten des Roboters oder ermöglichen es ihm, Vorschläge an den Nutzer zu machen. Beispielsweise kann Information über die durchschnittliche Verschmutzung genutzt werden, um Vorschläge zur Häufigkeit der Reinigung eines Teilgebiets zu machen (oder automatisch ein Reinigungsintervall zu bestimmen). Wenn ein Teilgebiet regelmäßig sehr ungleichmäßig verschmutzt ist, so kann der Roboter dem Nutzer vorschlagen, dieses nochmals zu unterteilen (oder diese weitere Unterteilung automatisch vornehmen).

Information über den Bodentyp (Fliesen, Parkett, Teppich, rutschfest, glatt, etc.) kann genutzt werden, um ein für den Bodentyp geeignetes Reinigungsprogramm automatisch zu wählen oder dem Nutzer ein Reinigungsprogramm vorzuschlagen. Zudem kann automatisch das Fahrverhalten (z.B. die maximale Geschwindigkeit oder der minimale Kurvenradius) angepasst werden, um beispielsweise einen verstärkten Schlupf auf einem Teppich zu korrigieren. Teilgebiete oder Bereiche in Teilgebieten, in denen der Roboter häufiger hängen bleibt (z.B. an herumliegenden Kabeln oder ähnlichem) und nur mit Hilfe des Nutzers befreit werden kann, können als Eigenschaft eines Teilgebietes gespeichert werden. In Zukunft können derartige Bereiche gemieden, mit geringer Priorität (z.B. am Ende eines Reinigungsvorganges) gereinigt, oder nur dann gereinigt werden, wenn der Nutzer anwesend ist.

Wie zuvor erwähnt, kann einem als Zimmer identifizierten Teilgebiet eine Bezeichnung (Schlafzimmer, Flur, etc.) zugeordnet werden. Dies kann entweder der Nutzer tun oder der Roboter kann automatisiert eine Bezeichnung wählen. Basierend auf der Bezeichnung eines Teilgebietes, kann der Roboter sein Verhalten anpassen. Beispielsweise kann der Roboter dem Nutzer - abhängig von der einem Teilgebiet zugeordneten Bezeichnung - ein an die Bezeichnung angepasstes Reinigungsverhalten vorschlagen und so die Einstellung des Roboters auf die Nutzerbedürfnisse vereinfachen. Beispielsweise kann die Bezeichnung eines Gebiets in einer Kalenderfunktion berücksichtigt werden. Demnach kann z.B. einem als Schlafzimmer bezeichnetes Teilgebiet eine Zeitspanne zugeordnet werden (z.B. 22-8 Uhr), innerhalb der der Roboter das betreffende Gebiet nicht befahren darf. Ein anderes Beispiel ist die Benennung eines Teilgebiets als Essecke (vgl. Fig. 7, Teilgebiet 320). Diese Bezeichnung lässt auf eine verstärkte Verschmutzung schließen (z.B. Brösel auf dem Boden), weshalb diesem Teilgebiet bei der Reinigung eine erhöhte Priorität gegeben werden kann. Diese Beispiele zeigen, dass die weiter oben erläuterte Unterteilung der Karte des Roboters und die (funktionale) Bezeichnung der Teilgebiete einen entscheidenden Einfluss auf das spätere Verhalten des Roboters haben kann.

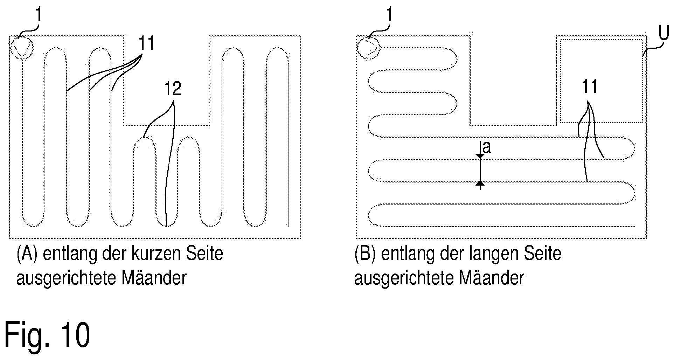

Zur Beschleunigung einer Reinigung mehrere Teilgebiete können diese sequentiell durchgeführt werden, wobei Übergangsfahrten zwischen den Teilgebieten möglichst vermieden werden. Dies kann gewährleistet werden, wenn der Endpunkt eines Reinigungsvorganges eines Teilgebiets so gewählt wird, dass er nahe dem Startpunkt des Reinigungsvorganges des nächsten Teilgebiets liegt. Frei befahrbare Gebiete können sehr gut entlang eines mäanderförmigen Pfads gereinigt werden. Der Abstand der geradlinigen Pfadabschnitte des mäanderförmigen Pfads kann an die Breite des zu reinigenden Teilgebiets angepasst werden, um ein möglichst gleichmäßiges Reinigungsergebnis zu erzielen sowie um an einem gewünschten Ort den Reinigungsvorgang des Teilgebietes zu beenden. Es soll beispielsweise ein rechteckiges Gebiet beginnend in der oberen linken Ecke und endend in der unteren rechten Ecke entlang eines mäanderförmigen Pfades gereinigt werden, dessen geradlinige Pfadabschnitte 11 waagrecht verlaufen (ähnlich Fig. 10B, die Begriffe rechts, links, oben, unten, waagrecht und senkrecht beziehen sich dabei auf die Darstellung in der Karte). Die Höhe des rechteckigen Teilgebiets geteilt durch den (für eine flächendeckende Reinigung) maximalen Abstand a der geradlinigen Pfadabschnitte 11 ergibt die Mindestzahl an Bahnen, welche der Roboter fahren muss um das Rechteckgebiet vollständig abzudecken. Hieraus kann nun der optimale Abstand der Pfadabschnitte bestimmt werden um den gewünschten Endpunkt zu erreichen. Dieser optimale Abstand sowie die Orientierung des mäanderförmigen Pfades (waagrecht oder senkrecht) kann einem Teilgebiet zugeordnet und für das betreffende Teilgebiet gespeichert werden.

Bei einer Reinigungsfahrt des Roboters entlang eines mäanderförmigen Pfades durch ein Teilgebiet können die geradlinigen Pfadabschnitte 11 vergleichsweise schnell durchfahren werden, wohingegen Kurven 12 (über 180°) vergleichsweise langsam durchfahren werden. Um ein Teilgebiet möglichst schnell zu reinigen, kann es vorteilhaft sein, möglichst wenig Kurven 12 zu fahren. Bei der Reinigung eines rechteckigen Teilgebiets kann der mäanderförmige Pfad so orientiert sein, dass die geradlinigen Pfadabschnitte 11 parallel zur längsten Kante des rechteckigen Teilgebietes liegen. Wenn das Teilgebiet eine komplexere Geometrie als ein Rechteck aufweist (insbesondere ein nicht-konvexes Polygon ist), so kann die Orientierung des mäanderförmigen Pfades ausschlaggebend dafür sein, ob das Gebiet in einem Zug vollständig gereinigt werden kann. Im Falle eines u-förmigen Teilgebiet gemäß dem Beispiel aus Fig. 10, lässt sich dieses mit einem senkrechten orientierten Mäander gleichmäßig abdecken (siehe Fig. 10A) gezeigt. Mit einem waagrecht orientierten Mäander entsteht ein ungereinigter Bereich U (siehe Fig. 10B). Es kann also wie oben erwähnt sinnvoll sein, neben dem optimalen Abstand der geradlinigen Mäanderpfadabschnitte auch die Orientierung des Mäanders dem betreffenden Teilgebiet zuzuordnen und zu speichern.

Ein weiteres Beispiel, bei dem die Richtung, in der der Roboter einen geplanten Pfad durchfährt relevant ist, ist die Reinigung eines Teppichs. Im Falle eines hochflorigen Teppichs kann die Fahrtrichtung einen Einfluss auf das Reinigungsergebnis haben und wechselnde Fahrrichtungen erzeugen ein Streifenmuster auf dem Teppich, welches unerwünscht sein kann. Um dieses Streifenmuster zu vermeiden, kann beispielsweise bei einer Fahrt entlang eines mäanderförmigen Pfades nur in einer Vorzugsrichtung gereinigt werden. Bei der Rückfahrt (gegen die Vorzugsrichtung) kann die Reinigung durch Abschalten von Bürsten und Saugeinheit deaktiviert werden. Die Vorzugsrichtung kann mittels Sensoren oder durch Nutzereingabe ermittelt, dem betreffenden Teilgebiet zugeordnet und für dieses gespeichert werden.

Wie bereits erläutert ist es oft nicht wünschenswert, dass ein Roboter langsam durch ein schwer passierbares Gebiet fährt (und dabei Kollisionen mit Hindernissen riskiert). Stattdessen sollte der Roboter das schwer passierbare Gebiet umfahren. Deshalb kann ein als schwer passierbar erkanntes Gebiet (siehe oben) das Attribut "zu meidendes Gebiet" zugeordnet werden. Das schwer befahrbare Gebiet wird der Roboter dann außer für eine geplante Reinigung nicht befahren. Auch andere Bereiche wie z.B. ein wertvoller Teppich können vom Nutzer oder auch durch den Roboter selbsttätig mit dem Attribut "zu meidendes Gebiet" gekennzeichnet werden. Folglich wird das betreffende Teilgebiet bei einer Pfadplanung einer Übergangsfahrt (Fahrt ohne Reinigung) von einem Punkt zu einem anderen nur berücksichtigt, wenn keine andere Möglichkeit existiert. Des Weiteren stören die zahlreichen Hindernisse eines schwer befahrbaren Gebiets bei einer Reinigung entlang eines mäanderförmigen Pfades. In einem schwer passierbaren Gebiet kann also eine speziell angepasste Reinigungsstrategie verwendet werden (statt des Mäanders). Diese kann insbesondere darauf abgestimmt sein, dass möglichst keine isolierten, nicht gereinigte Bereiche bei den zahlreichen Umfahrungen der Hindernisse entstehen. Wenn diese entstehen, so kann der Roboter speichern, ob und wo es eine Zufahrt zu solchen nicht gereinigten Bereichen gibt oder ob dieser Bereich vollständig durch zu eng stehende Hindernisse (z.B. Stuhl- und Tischbeine) blockiert ist. In letzterem Fall kann der Nutzer über nicht gereinigte (weil unzugängliche) Bereiche informiert werden.

Bei der Verwendung eines Reinigungsroboters kann es vorkommen, dass nicht genügend Zeit für eine vollständige Reinigung des Robotereinsatzgebiets zur Verfügung steht. Hierbei kann es vorteilhaft sein, wenn der Roboter selbständig nach gewissen Vorgaben - z.B. unter Berücksichtigung einer Zeitvorgabe - die Zeit für eine Reinigung plant und die Reinigung entsprechend dieser Zeitplanung (*Scheduling*) durchführt. Bei der Zeitplanung können z.B. (1.) die erwartete Zeit für die Reinigung eines jeden zu reinigenden Teilgebiets, (2.) die Zeit für die Fahrt von einem Teilgebiet zum nächsten, (3.) die Priorität der Teilgebiete, (4.) die Zeit seit der letzten Reinigung eines Gebiets und/oder (5.) die auf einer oder mehreren vorangegangenen Erkundungs- und Reinigungsfahrten ermittelte Verschmutzungsstärke eines oder mehrerer Teilgebiete berücksichtigt werden.

Um die Zeitdauer für die Reinigung eines konkreten Teilgebiets vorherzusagen, kann der Roboter Erfahrungswerte aus vorangegangenen Reinigungsfahrten und theoretische durch Simulationen ermittelte Werte nutzen. Beispielsweise kann die zu erwartende Zeitdauer für kleine, geometrisch einfache Teilgebiete ermittelt werden (z.B. Anzahl der Mäandersegmente mal die Länge eines Segments geteilt durch die Geschwindigkeit plus der nötigen Wendezeit des Roboters), um eine Vorhersage für komplexere Gebiete (die aus den einfachen Teilgebieten zusammengesetzt sind) zu erstellen. Zur Bestimmung der zu erwartenden Bearbeitungszeitdauer für mehrere Teilgebiete wird die Zeitdauer zur Bearbeitung der einzelnen Teilgebiete und die Zeitdauer für die Fahrten zwischen den Teilgebieten berücksichtigt. Der menschliche Nutzer kann sich den automatisch erstellten Reinigungszeitplan (*Cleaning Schedule*) anzeigen lassen und er kann diesen bei Bedarf abändern. Alternativ kann sich der Nutzer vom Roboter auch mehrere Reinigungszeitpläne vorschlagen lassen, unter diesen einen auswählen und den ausgewählten Zeitplan bei Bedarf abändern. In einem weiteren Beispiel kann der Roboter automatisch und ohne weitere Interaktion mit dem Nutzer mit der Reinigung entsprechend einem automatisch generierten Zeitplan beginnen. Bei der Vorgabe einer Soll-Bearbeitungsdauer, kann der Roboter einen Zeitplan basierend auf den Teilgebieten zugeordneten Attributen ermitteln. Attribute können in diesem Fall z.B. sein: Prioritäten, die erwarteten Bearbeitungszeiten einzelner Teilgebiete, die erwartete Verschmutzung der einzelnen Teilgebiete. Nach Ablauf der Sollzeit kann der Roboter die Bearbeitung abbrechen, das aktuell bearbeitete Teilgebiet fertig bearbeiten oder die Sollzeit überziehen bis zum Abbruch durch den Nutzer. Die oben dargestellten Prinzipien werden in der Folge anhand von zwei Beispielen erläutert.

*Beispiel 1* (Reinigung bis zum Abbruch durch Nutzer): In diesem Beispiel soll die Beispielwohnung aus Fig. 1 bis 7 mit einem Schnellreinigungsprogramm und einer Zeitvorgabe von beispielsweise 15 Minuten gereinigt werden (z.B. weil der Nutzer in Kürze Besuch erwartet). Hierbei muss die tatsächliche Zeitdauer für die Reinigung nicht fix (15 Minuten) sein, sondern kann ein paar Minuten länger oder kürzer sein, entsprechend dem tatsächlichen Eintreffen des Besuchs. Die Zeitvorgabe ist ein Richtwert. Es ist also wünschenswert, wenn der Roboter so lange reinigt, bis er vom Nutzer unterbrochen wird, dabei jedoch die dringlichsten Flächen (d.h. die Teilgebiete mit höchster Priorität) nach beispielsweise 90% der Zeit gereinigt sind. Hierzu kann der Nutzer in einer Voreinstellung oder bei Aufruf des Schnellreinigungsprogramms dem Roboter die Teilgebiete höchster Priorität mitteilen. Dies könnten z.B. der Eingangsbereich (siehe Fig. 3, Teilgebiet 200) und das Wohnzimmer (siehe Fig. 3, Teilgebiet 300) sein, da sich der Besuch nur in diesen Räumen aufhalten wird. Beide Räume zusammen sind zu groß um sie in der vorgegeben Zeit vollständig zu reinigen. Es kann also vorteilhaft sein, wenn die Teilgebiete und speziell das große Wohnzimmer 300 weiter in Teilgebiete unterteilt sind. So kann beispielsweise der Teppich (siehe Fig. 4, Teilgebiet 303) eine hohe Priorität und die Essecke (siehe Fig. 4, Teilgebiet 320) eine hohe Verschmutzung (vom Roboter zuvor detektiert oder basierend auf empirischen Werten vermutet) aufweisen. Nun kann es sein, dass der Roboter feststellt, dass er in der vorgegebenen Zeit entweder den Flur (200) und den Teppich (303) oder nur den Essbereich (320) sicher reinigen wird können. Beispielsweise aufgrund des größeren Reinigungsgewinns (z.B. gereinigte Fläche pro Zeiteinheit) beginnt der Roboter die Reinigung des Flurs (siehe Fig. 4, Teilgebiet 200) und des Teppichs (siehe Fig. 4, Teilgebiet 303) um dann die Essecke (siehe Fig. 4, Teilgebiet 320) solange zu reinigen, bis der Nutzer die Reinigung unterbricht.

*Beispiel 2* (Feste Zeitvorgabe): In einem zweiten Beispiel wird der Roboter beispielsweise in einem Kaufhaus eingesetzt, welches nur gereinigt wird, solange es geschlossen ist. Die für eine Reinigung zur Verfügung stehende Zeit ist also begrenzt und kann nicht verlängert werden. Das Einsatzgebiet des Roboters ist hierbei so groß, dass es nicht in der vorgegebenen Zeit gereinigt werden kann. Es kann somit vorteilhaft sein, Prioritäten für die unterschiedlichen Teilgebiete des Robotereinsatzgebietes vorgeben zu können. Beispielsweise soll das Teilgebiet, welches den Eingangsbereich umfasst, täglich gereinigt werden, während andere Teilgebiete, in welchen sich üblicherweise wenige Kunden aufhalten, nur alle drei Tagen gereinigt werden müssen und folglich eine geringe Priorität haben. Auf dieser Basis kann der Roboter eine vorläufige Wochenarbeitszeitplanung (*weekly work scheduling*) vornehmen. Es kann z.B. auch vorteilhaft sein, wenn der Roboter seine Zeitplanung für die Reinigung dynamisch an die tatsächlichen Erfordernisse anpasst. Beispielsweise kann die erwartete Verschmutzung eines Teilgebiets berücksichtigt werden. Diese bestimmt sich aus dem erfahrungsgemäßen Ausmaß der Verschmutzung oder der (messbaren) Anzahl an tatsächlichen Kunden in diesem Bereich. Die Anzahl der Kunden wird beispielsweise in einer Datenbank erfasst, wobei die Daten manuell vom Kaufhauspersonal eingetragen werden oder automatisch mittels Sensoren wie beispielsweise Bewegungsmeldern, Lichtschranken oder Kameras in Kombination mit einer Bildverarbeitung erfasst werden. Alternativ kann das Kaufhausmanagement kurzfristig die Reinigung eines zuvor nicht eingeplanten Teilgebiets fordern, da dieses beispielsweise durch einen Unfall besonders stark verschmutzt wurde. Der Roboter kann daher automatisiert ein neues Teilgebiet zur Reinigung einplanen und - um die Zeitvorgabe einzuhalten - die Reinigung eines anderen Teilgebiets auf den nächsten Tag verschieben.

Im Folgenden wird beschreiben, wie eine in mehrere Teilgebiete unterteilte Roboterkarte zur Verbesserung der Roboter-Nutzer-Kommunikation und Interaktion verwendet werden kann. Wie zuvor erwähnt würde eine Unterteilung des Robotereinsatzgebietes durch einen menschlichen Nutzer in der Regel intuitiv erfolgen. Für Maschinen ist dies hingegen eine im Allgemeinen sehr schwere Aufgabe, welche nicht immer zu den gewünschten Ergebnissen führt (dem Roboter fehlt die menschliche Intuition). Deshalb soll der Nutzer die von dem Roboter generierte Unterteilung der Wohnung an seine Bedürfnisse anpassen können. Die Möglichkeiten des Nutzers reichen hierbei von der Änderung der Aufteilung durch verschieben der Grenzen zwischen benachbarten Teilgebieten, über die weitere Unterteilung bestehender Teilgebiete bis hin zu neu erstellten, benutzerdefinierten Teilgebieten. Diese Teilgebiete können beispielsweise sogenannte *"keep-out areas"* sein, in die der Roboter nicht selbsttätig fahren darf. Die (vom Roboter vorgeschlagenen und ggf. durch den Nutzer veränderten) Teilgebiete können also vom Nutzer mit zusätzlichen Attributen versehen, die ebenfalls das Verhalten des Roboters im Betrieb beeinflussen können (in gleicher Weise wie die oben beschriebenen Attribute, welche automatisch einem Teilgebiet zugeordnet werden können). Mögliche Attribute sind beispielsweise (1.) Priorität (wie wichtig ist dem Nutzer die Reinigung des Bereichs), (2.) Bodentyp (welche Reinigungsstrategie (trocken mit Bürste, feucht, nur saugen, etc.) soll angewandt werden?), (3.) Zugänglichkeit (darf das betreffende Teilgebiet überhaupt befahren werden).

Eine weitere Möglichkeit ist, dass der Nutzer den Prozess der automatischen Aufteilung beeinflusst, indem er beispielsweise Hypothesen des Roboters bestätigt oder verwirft. Hierfür kann der Nutzer den Roboter "beauftragen" eine Unterteilung seines Einsatzgebietes vorzunehmen. Anschließend kann der Nutzer die Aufteilung beeinflussen, indem er beispielsweise Türen in die Karte einträgt oder vom Roboter falsch erkannte Türen löscht. Danach kann der Roboter basierend auf dem vom Nutzer mitgeteilten Zusatzwissen automatisiert eine erneute Unterteilung der Karte vornehmen. Des Weiteren kann der Benutzer relevante Parameter (z.B. typische Türbreiten, Dicke der Innenwände, Grundform der Wohnung, etc.) einstellen, so dass der Roboter unter Verwendung dieser Parameter eine angepasste Unterteilung seiner Einsatzgebietes generieren kann.

In einem Kulturkreis ähneln sich häufig bestimmte Teilbereiche des Robotereinsatzgebiets (z.B. einer Wohnung) wie beispielsweise die Schlafzimmer. Wenn der Benutzer also ein als Zimmer erkanntes Teilgebiet mit dem Namen "Schlafzimmer" versieht, so können dadurch die für die weitere automatisierte Unterteilung des Schlafzimmers verwendeten Kriterien - insbesondere die zur Erstellung von Hypothesen verwendeten Wahrscheinlichkeitsmodelle - an typische Schlafzimmer angepasst werden. Auf diese Weise kann ein ein mal zwei Meter großes Objekt in einem Schlafzimmer relativ zuverlässig als Bett interpretiert werden. In einem als "Küche" benannten Zimmer würde ein Objekt gleicher Größe möglicherweise als Kücheninsel detektiert werden. Die Benennung eines Teilgebietes erfolgt beispielsweise durch Auswahl eines auf der Karte verzeichneten Teilgebiets und anschließender Auswahl eines Namens aus einer vom Roboter vorgegeben Liste. Vom Nutzer frei wählbare Bezeichnungen für Zimmer könnten ebenfalls möglich sein. Um dem Nutzer die Orientierung in der vom Roboter generierten Karte zum Zwecke der Benennung eines Teilgebiets zu vereinfachen, kann der Nutzer ein Teilgebiet auswählen, woraufhin sich der Roboter in dieses Gebiet bewegt. Auf diese Weise kann der Nutzer nun einen direkten Zusammenhang zwischen dem dargestellten Teilgebiet und der tatsächlichen Roboterposition in seiner Wohnung erkennen und so dem Teilgebiet einfach einen passenden Namen geben.

Die Benennung eines Teilgebiets des Robotereinsatzgebietes durch den Nutzer setzt voraus, dass der Roboter bereits eine Unterteilung seines Einsatzgebietes generiert hat, die gut genug ist, dass der Nutzer das Schlafzimmer als solches erkennt (z.B. eine grobe Unterteilung wie in Fig. 3). Nutzer, die mit einer solchen vorläufigen Karte nicht arbeiten wollen, können gemäß einem alternativen Ausführungsbeispiel dem Roboter bei seiner ersten Erkundungsfahrt (d.h. im Zuge der Inbetriebnahme des Roboters) mitteilen, in welchem Zimmer er sich gerade befindet. So kann die Benennung des Zimmers, in dem sich der Roboter gerade befindet, unmittelbar als für die Unterteilung des Zimmers in Teilgebiete verwertet werden. Auf dieser Weise kann dem Nutzer gleich von Beginn an eine qualitativ hochwertig gegliederte Karte angezeigt werden. Hierbei kann der Nutzer den Roboter bei einer Erkundungsfahrt begleiten. Alternativ kann der Nutzer den Roboter gezielt zu ihm wichtigen Gebieten beispielsweise mittels Fernbedienung führen und dann benennen. Hierbei kann er auch auf Besonderheiten wie die zuvor besprochenen Keep-Out-Areas hinweisen.

Gemäß einem weiteren Ausführungsbeispiel ist der Roboter dazu ausgebildet, die Unterteilung der Karte durchzuführen oder die Eigenschaften eines erkannten Teilgebiets zu verbessern, indem er direkte Fragen an den Nutzer bezüglich der bei einer Erkundungsfahrt bestimmten Hypothesen stellt. Die diesbezügliche Kommunikation zwischen Roboter und Nutzer ist z.B. verhältnismäßig einfach mittels einer auf einem mobilen Gerät (z.B. Tablet-Computer, Telefon, etc.) installierte Software-Applikation möglich. Insbesondere kann dies geschehen, bevor dem Nutzer eine erste Version der Karte angezeigt wird, um die Qualität der vom Roboter dargestellten Karte zu steigern. So kann der Roboter z.B. fragen, ob es sich bei einem Gebiet, welches aufgrund eines Tisches mit Stühlen nur schwer befahrbar ist, um eine regelmäßig genutzte Essecke handelt. Wenn diese Frage bejaht wird, so kann der Roboter aus dieser Antwort automatisiert Rückschlüsse ziehen und dem betreffenden Teilgebiet bestimmte Attribute zuordnet. Im Falle einer Essecke könnte der Roboter dem Teilgebiet eine höhere Priorität bei der Reinigung zuordnet, weil davon auszugehen ist, dass dieses Gebiet stärker verschmutzt wird als andere. Der Nutzer könnte die zugewiesene Priorität bestätigen, ablehnen oder verändern.

Wenn der Roboter in einem neuen, ihm unbekannten Gebiet eingesetzt werden soll, so kann der Roboter durch gezielte Fragen an den Nutzer einige Vorabinformationen über sein Einsatzgebiet erhalten wie beispielsweise über die zu erwartende Größe der Wohnung (Robotereinsatzgebiet) und Anzahl der Zimmer. Insbesondere kann der Nutzer den Roboter über eine Abweichung von einer üblichen Wohnaufteilung oder über den Einsatz in einem gewerblichen Bereich wie beispielsweise einer Büroetage informieren. Diese Information ermöglichen es dem Roboter, einige für die Unterteilung seines Einsatzgebietes relevante Parameter (wie z.B. die für die Erstellung von Hypothesen verwendeten Wahrscheinlichkeitsmodelle) anzupassen, um bei einer nachfolgenden Erkundungsfahrt eine bessere Aufteilung der Karte generieren zu können und/oder den erkannten Teilgebieten passende Attribute (z.B. betreffend die Reinigungsstrategie) zuordnen zu können.

Für die Interaktion zwischen einem menschlichen Nutzer und dem Roboter können Informationen (wie z.B. eine Karte des Robotereinsatzgebietes) mittels einer Mensch-Maschine-Schnittstelle (*human machine interface,* HMI) vom Roboter für den Nutzer dargestellt werden oder Nutzereingaben zur Steuerung des Roboters entgegengenommen werden. Eine HMI kann z.B. auf einem Tablet-Computer (oder einem Personal-Computer, einem Mobiltelefon, etc.) mittels einer Software-Applikation realisiert werden. Eine robotergenerierte Karte ist im Allgemeinen recht komplex und für einen ungeübten Betrachter nur schwer zu interpretieren (vgl. z.B. Fig. 1). Für eine "reibungsfreie" Interaktion zwischen Roboter und Nutzer können die für den Nutzer dargestellten Information gefiltert und aufbereitet werden. Dies ermöglicht dem Nutzer, die dargestellten Informationen, leicht zu verstehen und anschließend die gewünschten Anweisungen an den Roboter zu geben. Um den Nutzer nicht zu verwirren, können kleine Details und Hindernisse in der angezeigten Karte weggelassen werden. Dies sind beispielsweise Tisch- und Stuhlbeine aber auch herumliegende Schuhe oder andere Gegenstände. In der Regel wird ein Nutzer einen Grundriss seiner Wohnung erkennen und in diesem Grundriss einzelne Zimmer identifizieren können. Um den Grundriss basierend auf den Messdaten (vgl. Fig. 1) automatisiert erzeugen zu können, identifiziert der Roboter als erstes eine sehr grobe Darstellung der Wohnung in Form eines Umrisses wie beispielsweise in Fig. 2 gezeigt. In diesem Umriss werden die Innenwände markiert, wodurch man einen Grundriss der Wohnung, wie in Fig. 3 gezeigt, erhält. Die Methoden, mittels denen der Roboter eine derartige Unterteilung seines Einsatzgebietes automatisiert ermitteln kann, wurde weiter oben schon beschrieben.

In einer Grundrissdarstellung gemäß Fig. 3 ist es für einen menschlichen Nutzer im Allgemeinen ohne Probleme möglich, das Schlafzimmer 100, den Flur 200 und das Wohnzimmer 300 zu identifizieren. Um die Darstellung für den Nutzer weiter zu vereinfachen, können die Räume beispielsweise als unterschiedlich farbige Flächen dargestellt werden. Zur Identifizierung des Wohnungsumrisses werden Hindernisse und Objekte, welche vollständig im Robotereinsatzgebiet liegen, ignoriert. So erhält man ein Gebiet, welches vollständig nach außen abgegrenzt ist, in das jedoch noch zahlreiche Hindernisse wie Innenwände oder an Wänden stehende Möbel hineinragen. Diese Hindernisse werden ebenfalls für die Grundrissdarstellung herausgefiltert bzw. ignoriert, um eine vereinfachte Karte des gesamten Robotereinsatzgebietes zu erhalten.

Dieses vereinfachte Karte des Robotereinsatzgebietes kann nun mit für den Nutzer leicht zu identifizierenden Elementen wie Innenwände, Türen und markanten Einrichtungsgegenständen automatisiert ergänzt werden, um einen einfachen Grundriss der Wohnung zu erhalten. Als Grundlage hierfür können die Sensordaten dienen (z.B. die erwähnten Begrenzungslinien, siehe Fig. 1), die automatisch vom Roboter generierte Unterteilung des Einsatzgebietes in Teilgebiete und Nutzereingaben aus vorangegangenen Nutzerinteraktionen. Hieraus kann der Roboter nun Hypothesen über den Verlauf der Innenwände und davorstehenden Schränken aufstellen und schließlich in der Karte darstellen. Insbesondere kann für diese vereinfachte Darstellung die weiter oben anhand von Fig. 9 beschriebene Methode der Unterteilung des Gebiets mittels sukzessiver Teilung von Rechtecken genutzt werden. Wenn die Bezeichnung der Räume bekannt ist, weil sie beispielsweise durch den Nutzer benannt wurden, kann dies ebenfalls in der vereinfachten Darstellung der Karte berücksichtigt werden, damit sich der Nutzer schneller zurechtfindet. Dies kann durch Anzeige des entsprechenden Raumnamens geschehen oder durch skizzenhafte Darstellung typischer Objekte eines Raumes. Beispielsweise wird im Schlafzimmer ein als Bett identifiziertes Objekt im Raum auch (schematisch) als Bett dargestellt. Um weitere Orientierungspunkte für den Nutzer zu setzen, kann in der angezeigten Karte die Position von Objekten eingezeichnet werden, die dem Roboter bekannt sind, wie z.B. die Position der Roboterbasisstation. Wenn der Roboter mit einem WLAN (*Wireless Local Area Network*) verbunden ist, so kann er durch Analyse der Feldstärke näherungsweise die Position der WLAN-Basisstation (*Access Point*) oder anderer im Drahtlosen Netzwerk vorhandener Geräte bestimmen und in der Karte markieren. Hat der Roboter eine Kamera, so kann er mit Methoden der Bildverarbeitung einzelne Objekte wie einen Tisch oder Schranktypen identifizieren und skizzenhaft in die Karte eintragen. Hierzu kann beispielsweise auf eine Bilddatenbank mit Skizzen typischer Einrichtungsgegenstände zurückgegriffen werden. Weitere Methoden, um Objekte zu lokalisieren und zu identifizieren wie beispielsweise die Markierung mittels RFID (*Radio-Frequency Identification*), sind bekannt und werden hier nicht weiter besprochen.

Im Alltag stellt ein Nutzer verschieden Anforderungen an den Roboter. So kann er beispielsweise die Reinigung der gesamten Wohnung, die Reinigung eines Raumes der Wohnung wie beispielsweise des Wohnzimmers (Fig. 3, Teilgebiet 300) oder die Reinigung eines Teils eines Raumes wie beispielsweise des Teppichs im Wohnzimmer (Fig. 6, Teilgebiet 303) fordern. Hierbei wird der Nutzer intuitiv diesen kleinen Bereich als Teilgebiet des Wohnzimmers ansehen, welches wiederum ein Teilgebiet der gesamten Wohnung ist. Diese für den menschlichen Nutzer intuitive, hierarchische Vorstellung der Wohnung soll sich in der Unterteilung und der Darstellung des Robotereinsatzgebiets in einer Karte widerspiegeln. Dies wird im Folgenden beispielhaft anhand der Beispielwohnung aus Fig. 1 bis 7 erläutert.

Damit der Nutzer sich leicht in der vom Roboter erstellten Karte zurechtfindet, wird zuerst ein stark vereinfachter Grundriss wie in Fig. 3 für den Nutzer auf einer HMI angezeigt. Bei Bedarf und auf Anweisung des Nutzers können weitere Details dargestellt werden. Beispielsweise kann der Nutzer in dem vereinfachten Grundriss (Fig. 3) das Wohnzimmer 300 auswählen, indem er es auf der mittels der HMI angezeigten Karte antippt oder mit einer Zoom-Geste den gewünschten Bereich vergrößert. Daraufhin wird der entsprechende Kartenausschnitt vergrößert und mit weitere Details dargestellt. Durch erneutes Antippen (oder anderweitige Eingabe wie z.B. Mausklick, Tastatureingabe, Spracheingabe, etc.) kann der Nutzer einen Bereich auswählen und eine Aktion wie beispielsweise eine sofortige Reinigung des dargestellten Teilgebiets oder eine Planungsfunktion wählen oder sich weitere Details anzeigen lassen.

Fig. 4 zeigt ein Beispiel, in dem das Wohnzimmer 300 nochmals bezüglich der verschiedenen Bodenbeläge wie Teppich (Ziffer 303) und Fliesenboden (Ziffer 302) unterteilt ist. In Fig. 5 ist das Wohnzimmer weiter unterteilt, indem die Essecke 320 mit Tisch und Stühlen als schwer befahrbarer Bereich identifiziert wurde. In Fig. 6 wurde der freie Bereich 310 nochmals in regelmäßigere kleine Teilgebiete 311, 312, 313 unterteilt. Die Wahl und die Reihenfolge der für diese Unterteilung genutzten Verfahren ist beliebig kombinierbar. Wenn der Nutzer den Roboter in verschiedenen Etagen eines Gebäudes einsetzt, so können diese logisch in eine hierarchische Unterteilung des Robotereinsatzgebiets eingefügt und dargestellt werden. So kann durch die HMI beispielsweise schematisch ein Haus mit den verschiedenen Etagen angezeigt. Wenn der Nutzer eine Etage beispielsweise durch Antippen auswählt, so wird eine für diese Etage hinterlegte Karte in ihrer einfachsten Form angezeigt (ähnlich wie in Fig. 3 gezeigt). In dieser kann der Nutzer wie oben beschrieben weiter hineinzoomen und/oder seine Anweisungen an den Roboter erteilen. Beispielsweise durch eine Zoom-Geste zum Herauszoomen wird erneut die Hausansicht mit den verschiedenen Etagen angezeigt.

## Patentansprüche

1. Verfahren zur automatischen Aufteilung einer Karte eines Robotereinsatzgebietes eines autonomen mobilen Roboters (1), das Verfahren weist auf:
Detektieren von Hindernissen sowie Bestimmen derer Größe und Position in der Karte mittels an dem Roboter (1) angeordneter Sensoren,
Analysieren der Karte mittels eines Prozessors zur Erkennung eines Bereichs mit einem Cluster von Hindernissen, wobei ein Cluster mindestens zwei Hindernisse aufweist; und
Definieren eines ersten Teilgebiets (320) mittels eines Prozessors derart, dass das erste Teilgebiet (320) einen erkannten Cluster enthält,
wobei dem ersten Teilgebiet (320) mindestens ein Attribut zugeordnet werden kann, das Einfluss auf das Verhalten des mobilen Roboters (1) haben kann,
wobei das Verfahren **dadurch gekennzeichnet ist, dass** die Hindernisse in einem Cluster so nahe beieinander sind, dass eine geradlinige Durchfahrt durch den Cluster unter Einhaltung eines Sicherheitsabstandes nicht möglich ist.

2. Verfahren gemäß Anspruch 1,
wobei in einem Cluster von Hindernissen jedes Hindernis ein benachbartes Hindernis aufweist, das zu dem Hindernis nicht mehr als einen vorgebbaren Maximalabstand entfernt ist.

3. Verfahren gemäß Anspruch 1, bei dem das Analysieren der Karte mittels eines Prozessors zur Erkennung eines Bereichs mit einem Cluster von Hindernissen aufweist:
Prüfen für ein jedes der detektieren Hindernisse, ob ein benachbartes Hindernis existiert, das nicht weiter als einen vorgebbaren Maximalabstand entfernt ist;
Zuordnen des Hindernisses und des benachbarten Hindernisses zu dem Cluster, sofern sie nicht bereits dem Cluster zugeordnet sind.

4. Verfahren gemäß einem der Ansprüche 1 bis 3, bei dem für die Erkennung eines Clusters nur Hindernisse berücksichtigt werden, die für sich jeweils kleiner sind als ein vorgebbarer Maximalwert.

5. Verfahren gemäß einem der Ansprüche 1 bis 4, bei dem ein Cluster nur erkannt und als solcher verarbeitet wird, wenn er mehr als eine vorgebbare Minimalanzahl von Hindernissen enthält.

6. Verfahren gemäß Anspruch 1, bei dem das Analysieren der Karte umfasst:
Detektieren, dass eine geradlinige Durchfahrt des Roboters (1) durch den Bereich durch die Hindernisse blockiert ist, basierend auf den Abständen zwischen den Hindernissen.

7. Verfahren gemäß einem der Ansprüche 1 bis 6, das weiter aufweist:
Assoziieren des ersten Teilgebietes (320) mit einem ersten Attribut, welches die Eigenschaft "schwer passierbar" anzeigt;
Speichern des ersten Teilgebietes (320) in der Karte zusammen mit dem ersten Attribut.

8. Verfahren gemäß einem der Ansprüche 1 bis 7, bei dem das Definieren eines ersten Teilgebiets (320) aufweist:
Abgrenzen des ersten Teilgebietes (320) mittels eines rechtwinkligen Polygons, welches den Cluster von Hindernissen einschließt, wobei das rechtwinklige Polygon einen ersten Mindestabstand von den Hindernissen aufweist.

9. Verfahren gemäß Anspruch 8, das weiter aufweist:
Prüfen, ob mindestens ein Bereich existiert, welcher zwischen dem ersten Teilgebiet (320) und einem weiteren Teilgebiet oder zwischen dem ersten Teilgebiet (320) und einem weiteren Hindernis liegt und ob die Abmessung dieses Bereichs entlang einer Raumrichtung einen Minimalwert unterschreitet;
Vergrößern des ersten Teilgebiets (320), sodass jener Bereich von dem ersten Teilgebiet eingeschlossen wird.

10. Verfahren gemäß einem der Ansprüche 1 bis 9, das weiter aufweist:
Speichern von Größe und Position von detektierten Hindernissen,
wobei das Analysieren der Karte weiter aufweist:
Berechnen von Parametern eines Wahrscheinlichkeitsmodells basierend auf den gespeicherten Daten über Größe und Position von detektierten Hindernissen, wobei das Wahrscheinlichkeitsmodell die Wahrscheinlichkeit bestimmt, ein Hindernis an einer bestimmten Position anzutreffen;
Anpassen, basierend auf dem Wahrscheinlichkeitsmodell, des Teilgebiets mit einem Cluster von Hindernissen derart, dass sich Hindernisse mit vorgebbarer Wahrscheinlichkeit innerhalb dieses Teilgebiets befinden.

11. Verfahren gemäß Anspruch 10, wobei die Parameter des Wahrscheinlichkeitsmodells auf Daten über die Größe und die Position von Hindernissen beruhen, die innerhalb eines bestimmten Zeitraums und/oder einer bestimmten Anzahl von Robotereinsätzen ermittelt wurden.

12. Verfahren gemäß einem der Ansprüche 1 bis 11, wobei das mindestens eine Attribut aus der Gruppe ausgewählt ist, welche umfasst: eine Priorität, eine erwartete Bearbeitungszeit des ersten Teilgebiets, eine erwartete Verschmutzung des ersten Teilgebiets, einen Bodentyp, einen Reinigungsmodus, eine Zugänglichkeit des ersten Teilgebiets, und einen Namen des ersten Teilgebiets.

13. Autonomer Roboter (1), der mit einer internen und/oder externen Datenverarbeitungsanlage verbunden ist, welche dazu ausgebildet ist, ein Softwareprogramm auszuführen, das, wenn es von der Datenverarbeitungsanlage ausgeführt wird, den Roboter (1) dazu veranlasst, ein Verfahren gemäß einem der Ansprüche 1 bis 12 auszuführen.

## Claims

1. A method for automatically subdividing a map of a robot deployment area of an autonomous mobile robot (1); the method comprising:
detecting obstacles and determining their size and position on the map by means of sensors arranged on the robot (1),
analyzing the map with a processor to identify an area with a cluster of obstacles, wherein a cluster has at least two obstacles; and
defining a first sub-area (320) by means of a processor, such that the first sub-area (320) contains an identified cluster,
wherein at least one attribute that can influence the behavior of the mobile robot (1) can be assigned to the first sub-area (320),
wherein the method is **characterized in that**
the obstacles in a cluster are so close together that it is not possible to drive through the cluster in a straight line while maintaining a safety distance.

2. The method according to claim 1,
wherein, in a cluster of obstacles, each obstacle has a neighboring obstacle that is no more than a specifiable maximum distance away from said obstacle.

3. The method of claim 1, in which analyzing the map with a processor to identify an area having a cluster of obstacles comprises:
checking, for each of the detected obstacles, whether there is a neighboring obstacle that is no further away than a specifiable maximum distance;
assigning the obstacle and the neighboring obstacle to the cluster if they are not already assigned to the cluster.

4. The method according to any one of claims 1 to 3, in which, for the detection of a cluster, only obstacles are taken into account which, individually, are each smaller than a specifiable maximum value.

5. The method according to any one of claims 1 to 4, in which a cluster is only identified and processed as such if it contains more than a specifiable minimum number of obstacles.

6. The method of claim 1, in which analyzing the map comprises: detecting that a straight-line passage of the robot (1) through the area is blocked by the obstacles based on the distances between the obstacles.

7. The method according to any one of claims 1 to 6, further comprising:
associating the first sub-area (320) with a first attribute indicative of the property "difficult to pass";
storing the first sub-area (320) in the map along with the first attribute.

8. The method according to any one of claims 1 to 7, wherein the defining of a first sub-area (320) comprises:
delimiting the first sub-area (320) by means of a rectangular polygon enclosing the cluster of obstacles, wherein the rectangular polygon has a first minimum distance from the obstacles.

9. The method according to claim 8, further comprising:
checking whether at least one area exists which lies between the first sub-area (320) and another sub-area or between the first sub-area (320) and another obstacle, and whether the dimension of this area along a spatial direction falls below a minimum value;
enlarging the first sub-area (320), such that that area is enclosed by the first sub-area.

10. The method according to any one of claims 1 to 9, further comprising:
saving size and position of detected obstacles,
wherein the analyzing of the map further comprises:
calculating parameters of a probabilistic model based on the stored data on the size and position of detected obstacles, wherein the probabilistic model determines the probability of encountering an obstacle at a specific position;
adjusting, based on the probability model, the sub-area with a cluster of obstacles in such a way that obstacles are located within this sub-area with a definable probability.

11. The method according to claim 10, wherein the parameters of the probabilistic model are based on data about the size and the position of obstacles, which were determined within a certain period of time and/or a certain number of robot deployments.

12. The method according to any one of claims 1 to 11, wherein the at least one attribute is selected from the group comprising: a priority, an expected processing time of the first sub-area, an expected contamination of the first sub-area, a soil type, a cleaning mode, an accessibility of the first sub-area, and a name of the first sub-area.

13. An autonomous robot (1) connected to an internal and/or external data processing system which is designed to execute a software program which, when executed by the data processing system, causes the robot (1) to carry out a method according to any one of claims 1 to 12.

## Revendications

1. Procédé de division automatique d'une carte d'une zone de déploiement de robot d'un robot mobile autonome (1) ; la procédure comprend :
la détection des obstacles et la détermination de leur taille et de leur position sur la carte au moyen de capteurs disposés sur le robot (1),
l'analyse de la carte avec un processeur pour identifier une zone avec un groupe d'obstacles, dans lequel un groupe comprend au moins deux obstacles ; et
la définition d'une première sous-zone (320) au moyen d'un processeur de sorte que la première sous-zone (320) contient un groupe identifié,
dans lequel au moins un attribut pouvant influencer le comportement du robot mobile (1) peut être associé à la première sous-zone (320),
le procédé étant **caractérisé en ce que**
les obstacles d'un groupe sont si proches les uns des autres qu'il n'est pas possible de traverser le groupe en ligne droite tout en maintenant une distance de sécurité.

2. Procédé selon la revendication 1,
dans lequel, dans un groupe d'obstacles, chaque obstacle comprend un obstacle voisin qui n'est pas à plus d'une distance maximale spécifiable de l'obstacle.

3. Procédé selon la revendication 1, dans lequel l'analyse de la carte avec un processeur pour identifier une zone ayant un groupe d'obstacles comprend :
le fait de vérifier, pour chacun des obstacles détectés, s'il existe un obstacle voisin qui n'est pas plus éloigné qu'une distance maximale spécifiable ;
l'association d'obstacle et de l'obstacle voisin au groupe s'ils ne sont pas déjà associés au groupe.

4. Procédé selon l'une quelconque des revendications 1 à 3, dans lequel pour l'identification d'un groupe seuls sont pris en compte les obstacles qui sont chacun inférieurs à une valeur maximale spécifiable.

5. Procédé selon l'une quelconque des revendications 1 à 4, dans lequel un groupe n'est identifié et traité comme tel que s'il contient plus qu'un nombre minimal spécifiable d'obstacles.

6. Procédé selon la revendication 1, dans lequel l'analyse de la carte comprend :
la détection qu'un passage en ligne droite du robot (1) à travers la zone est bloqué par les obstacles sur la base des distances entre les obstacles.

7. Procédé selon l'une quelconque des revendications 1 à 6, comprenant en outre :
l'association de la première sous-zone (320) à un premier attribut indicatif de la propriété « difficile à passer » ;
le stockage de la première sous-zone (320) dans la carte avec le premier attribut.

8. Procédé selon l'une quelconque des revendications 1 à 7, dans lequel la définition d'une première sous-zone (320) comprend : la délimitation de la première sous-zone (320) au moyen d'un polygone rectangulaire entourant le groupe d'obstacles, dans lequel le polygone rectangulaire comprend une première distance minimale des obstacles.

9. Procédé selon la revendication 8, comprenant en outre :
le fait de vérifier s'il existe au moins une zone qui se trouve entre la première sous-zone (320) et une autre sous-zone ou entre la première sous-zone (320) et un autre obstacle et si la dimension de cette zone le long d'une direction spatiale tombe en dessous d'une valeur minimale ;
l'agrandissement de la première sous-zone (320) de sorte que cette zone soit entourée par la première sous-zone.

10. Procédé selon l'une quelconque des revendications 1 ou 9, comprenant en outre :
l'enregistrement de la taille et de la position des obstacles détectés,
dans lequel l'analyse de la carte comprend en outre :
le calcul des paramètres d'un modèle probabiliste sur la base des données stockées sur la taille et la position des obstacles détectés, dans lequel le modèle probabiliste détermine la probabilité de rencontrer un obstacle à une position spécifique ;
l'adaptation, sur la base du modèle probabiliste, de la sous-zone avec un groupe d'obstacles de sorte que les obstacles soient localisés dans cette sous-zone avec une probabilité spécifiable.

11. Procédé selon la revendication 10, dans lequel les paramètres du modèle probabiliste sont basés sur des données de taille et de position d'obstacles, qui ont été déterminées dans un certain laps de temps et/ou un certain nombre de déploiements de robots.

12. Procédé selon l'une quelconque des revendications 1 à 11, dans lequel l'au moins un attribut est sélectionné dans le groupe comprenant : une priorité, un temps de traitement attendu de la première sous-zone, une salissure attendue de la première sous-zone, un type de sol, un mode de nettoyage, une accessibilité de la première sous-zone, et un nom de la première sous-zone.

13. Robot autonome (1) connecté à un système informatique interne et/ou externe qui est conçu pour exécuter un programme logiciel qui, lorsqu'il est exécuté par le système informatique, amène le robot (1) à exécuter un procédé selon l'une quelconque des revendications 1 à 12.
